# EUROPEAN PATENT SPECIFICATION

(11) **EP 3 369 283 B1**
(45) Date of publication and mention of the grant of the patent: **20.11.2019**
(21) Application number: 16781613.1
(22) Date of filing: 29.09.2016
(51) Int. Cl.: H04W 74/08

(54) **CONFIGURING DOWNLINK LISTEN-BEFORE-TALK PRIORITY CLASS FOR UPLINK GRANT TRANSMISSION IN LICENSED ASSISTED ACCESS**
KONFIGURATION VON DOWNLINK-LISTEN-BEFORE-TALK-PRIORITÄTSKLASSE FÜR UPLINK-GENEHMIGUNGSÜBERTRAGUNG IN LIZENZIERTEM UNTERSTÜTZTEM ZUGANG
CONFIGURATION D'UNE CLASSE DE PRIORITÉ D'ÉCOUTE AVANT DE PARLER DE LIAISON DESCENDANTE POUR UNE TRANSMISSION D'AUTORISATION DE LIAISON MONTANTE DANS UN ACCÈS ASSISTÉ PAR LICENCE

(30) Priority: 26.10.2015 US 201562246487 P; 11.03.2016 US 201662307038 P
(43) Date of publication of application: 05.09.2018
(73) Proprietor: Intel IP Corporation, Santa Clara, CA 95054 (US)
(72) Inventor: BHORKAR, Abhijeet, Fremont, California 94555 (US); JEON, Jeongho, San Jose, California 95120 (US); YE, Qiaoyang, San Jose, California 95134 (US); NIU, Huaning, San Jose, California 95120 (US)
(74) Representative: HGF Limited
(86) International application number: PCT/US2016/054313
(87) International publication number: WO 2017/074638

(56) References cited:
- ERICSSON: "On Framework and Parameters for Category-4 LBT for DL-only LAA", 3GPP DRAFT; R1-156035, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Malmö, Sweden; 20151005 - 20151009 4 October 2015 (2015-10-04), XP051002773, Retrieved from the Internet: URL:http://www.3gpp.org/ftp/Meetings_3GPP_ SYNC/RAN1/Docs/ [retrieved on 2015-10-04]
- WI RAPPORTEUR (ERICSSON ET AL: "RAN1 Agreements and Working Assumptions for Rel-13 LAA (Revision of R1-156379)", 3GPP DRAFT; R1-156386, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Malmö, Sweden; 20151005 - 20151009 23 October 2015 (2015-10-23), XP051022036, Retrieved from the Internet: URL:http://www.3gpp.org/ftp/tsg_ran/WG1_RL 1/TSGR1_82b/Docs/ [retrieved on 2015-10-23]

## Description

### FIELD

The present disclosure relates to wireless communications, and more specifically, to listen-before-talk operations for licensed assisted access in wireless transmissions.

### BACKGROUND

Wireless mobile communication technology uses various standards and protocols to transmit data between a node (e.g., a transmission station) and a wireless device (e.g., a mobile device), or a user equipment (UE). Some wireless devices communicate using orthogonal frequency-division multiple access (OFDMA) in a downlink (DL) transmission and single carrier frequency division multiple access (SC-FDMA) in an uplink (UL) transmission, for example. Standards and protocols that use orthogonal frequency-division multiplexing (OFDM) for signal transmission include the third generation partnership project (3GPP) long term evolution (LTE), the Institute of Electrical and Electronics Engineers (IEEE) 802.16 standard (e.g., 802.16e, 802.16m), which is commonly known to industry groups as WiMAX (Worldwide interoperability for Microwave Access), and the IEEE 802.11 standard, which is commonly known to industry groups as WiFi.

In 3GPP radio access network (RAN) LTE systems, the node can be an Evolved Universal Terrestrial Radio Access Network (E-UTRAN) Node B (also commonly denoted as evolved Node Bs, enhanced Node Bs, eNodeBs, or eNBs) as well as one or more Radio Network Controllers (RNCs), which communicate with the UE. The DL transmission can be a communication from the node (e.g., eNB) to the UE, and the UL transmission can be a communication from the wireless device to the node. In LTE, data can be transmitted from the eNodeB to the UE via a physical downlink shared channel (PDSCH). A physical UL control channel (PUCCH) can be used to acknowledge that data was received.

The explosive wireless traffic (data flow) growth across various network cells leads to an urgent need of rate improvement. With mature physical layer techniques, further improvement in the spectral efficiency will likely be marginal. On the other hand, the scarcity of licensed spectrum in low frequency band is resulting in a deficit in the data rate boost. Thus, interests are emerging in the operation of LTE systems in unlicensed spectrum. As a result, one major enhancement for LTE in 3GPP Release 13 has been to enable operation in the unlicensed spectrum via Licensed-Assisted Access (LAA), which expands the system bandwidth by utilizing the flexible carrier aggregation (CA) framework introduced by the LTE-Advanced system. Enhanced operation of LTE systems in unlicensed spectrum is expected in future releases and 5G systems. Potential LTE operation in unlicensed spectrum includes, but is not limited to the LTE operation in the unlicensed spectrum via dual connectivity (DC) (referred to as DC based LAA) and the standalone LTE system in the unlicensed spectrum, in which LTE-based technology operates in unlicensed spectrum without utilizing an "anchor" in licensed spectrum. This combines the performance benefits of LTE technology with the simplicity of Wi-Fi-like deployments.

The unlicensed frequency band of interest in 3GPP is the 5 GHz band, which has wide spectrum with global common availability. The 5 GHz band in the US is governed by Unlicensed National Information Infrastructure (U-NII) rules by the Federal Communications Commission (FCC). The main incumbent system in the 5 GHz band is the Wireless Local Area Networks (WLAN), especially those based on the IEEE 802.11 a/n/ac technologies, for example. Because WLAN systems are widely deployed for carrier-grade access service and data offloading, sufficient care should be taken before the deployment, and why Listen-Before-Talk (LBT) is considered as a useful feature of Rel-13 LAA system for fair coexistence with the incumbent WLAN system. LBT is a procedure whereby radio transmitters first sense the communication medium and transmit only if the medium is sensed to be idle. Further, LBT is an important feature for co-existence in the unlicensed band, wherein a transmitter listens to detect potential interference on the channel, only transmitting in the absence of interfering signals above a given threshold. Furthermore, different regions such as Europe have regulations concerning LBT for operation in unlicensed bands. WiFi devices use carrier sense multiple access with collision avoidance (CSMA/CA) as an LBT scheme, for example.

Document ERICSSON: "On Framework and Parmeters for Category-4 LBT for DL-only LAA", 3GPP DRAFT; R1-156035, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Malmo, Sweden; 20151005 - 20151009 a October 2015 (2015-10-04), XP051002773 refers to an eNB performing an LBT protocol in line with one of four LBT priority classes on unlicensed carriers and then transmitting a DL burst on carriers sensed to be idle.

### BRIEF DESCRIPTION OF THE DRAWINGS

**FIG. 1** illustrates a block diagram illustrating an example wireless communications network environment for a UE or eNB according to various aspects or embodiments.
**FIG. 2** illustrates example system or device for configuring DL LBT priority classes for UL grant transmission in LAA or cross-TxOP scheduling operations according to various aspects or embodiments.
**FIG. 3** illustrates an example network device for configuring DL LBT priority classes for UL grant transmission in LAA or cross-TxOP scheduling operations according to various aspects or embodiments.
**FIGs. 4-11** illustrate examples of transmissions for DL LBT priority classes for UL grant transmission in LAA or cross-TxOP scheduling operation according to various aspects or embodiments.
**FIG. 12** illustrates an example process flow for DL LBT priority classes for UL grant transmission in LAA or cross-TxOP scheduling operations according to various aspects or embodiments.

### DETAILED DESCRIPTION

The present disclosure will now be described with reference to the attached drawing figures, wherein like reference numerals are used to refer to like elements throughout, and wherein the illustrated structures and devices are not necessarily drawn to scale. As utilized herein, terms "component," "system," "interface," and the like are intended to refer to a computer-related entity, hardware, software (e.g., in execution), and/or firmware. For example, a component can be a processor, a process running on a processor, a controller, a circuit, circuitry or a circuit element, an object, an executable, a program, a storage device, a computer, a tablet PC and/or a mobile phone with a processing device. By way of illustration, an application running on a server and the server can also be a component. One or more components can reside within a process, and a component can be localized on one computer and/or distributed between two or more computers. A set of elements or a set of other components can be described herein, in which the term "set" can be interpreted as "one or more."

Further, these components can execute from various computer readable storage media having various data structures stored thereon such as with a module, for example. The components can communicate via local or remote processes such as in accordance with a signal having one or more data packets (e.g., data from one component interacting with another component in a local system, distributed system, and/or across a network, such as, the Internet, a local area network, a wide area network, or similar network with other systems via the signal).

As another example, a component can be an apparatus with specific functionality provided by mechanical parts operated by electric or electronic circuitry, in which the electric or electronic circuitry can be operated by a software application or a firmware application executed by one or more processors. The one or more processors can be internal or external to the apparatus and can execute at least a part of the software or firmware application. As yet another example, a component can be an apparatus that provides specific functionality through electronic components or elements without mechanical parts; the electronic components can include one or more processors therein to execute software and/or firmware that confer(s), at least in part, the functionality of the electronic components.

Use of the word exemplary is intended to present concepts in a concrete fashion. As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form. Furthermore, to the extent that the terms "including", "includes", "having", "has", "with", or variants thereof are used in either the detailed description and the claims, such terms are intended to be inclusive in a manner similar to the term "comprising".

### OVERVIEW

In consideration of the above described deficiencies, various components and techniques are disclosed that enable networks devices (e.g., eNBs) to utilize LBT priority classes for UL grant transmission. In particular, the UL grant transmission, transmitted via physical downlink control channel (PDCCH) such as downlink control information (DCI) Format 0a / 0b / 4a / 4b, can be assigned an equal or a lower LBT priority class, or equivalently an equal or higher priority, than the DL grant transmission, such as with DCI Format 1 / 1A / 1B / 1C / 2 / 2A / 2B / 2C. If a DL transmission burst contains traffic (e.g., data or elements) corresponding to different LBT priority classes, the lowest priority can be used for the LBT parameters, for example. In addition, a UL grant can be assigned the highest LBT priority class while other traffic data or elements (e.g., DL grant, LBT parameters / parameter data, or PDSCH data) within the same DL transmission burst can be assigned a lower LBT priority class or level, for example.

A DL category 4 LBT priority class, for example, can be defined by at least the minimum and maximum contention window (CW) sizes and the number of clear channel assessment (CCA) slots in the defer period as LBT parameters shown in Table 1 below, where CWmin, CWmax and n refer to the minimum contention window size, the maximum contention window size and the number of CCA slots in the defer period, respectively, during which LBT processes are performed.

**Table 1: LBT priority classes for DL burst transmission**

| **LBT PRIORITY CLASS** | CWmin | CWmax | n |
|---|---|---|---|
| 1 | 3 | 7 | 1 |
| 2 | 7 | 15 | 1 |
| 3 | 15 | 63 | 3 |
| 4 | 15 | 1023 | 7 |

The smaller the LBT priority class number is for a transmission, the higher the priority is, in which a first class priority or LBT priority class of 1 is higher than an LBT class priority of 4, for example. The choice of LBT priority class for DL burst transmission traffic (e.g., a DL grant, UL grant, PDSCSH, etc.) can depend on the quality of service (QoS) of the traffic. As an example, best effort traffic could not use a DL LBT priority class with higher priority than the DL LBT priority class 3.

Additionally, a network device (e.g., the eNB) can enable cross-Transmission Opportunity (TxOP) scheduling with other network device (e.g., UE) where a DL transmission comprises only a UL grant without a PDSCH. The eNB can generate a DL transmission with one or more UL grants having one or more indications within a first transmission opportunity that can be transmitted to the UE and further enable scheduling one or more uplink (UL) transmissions outside of the TxOP of the DL transmission or corresponding UL grant, considered as cross-TxOP scheduling. These indications can specify or indicate a particular LBT process(es) / protocol with a corresponding LBT priority to a UE, and in particular when UL grant only transmission is being transmitted or received.

A TxOP can be referred to as a bounded time interval, as defined by a standard or a standards body (e.g., 3GPP, or other). During this time interval, a network device (e.g., an eNB) can communicate or transmit as many frames or subframes as possible as long as the duration of the transmission does not extend beyond a maximum duration of the TxOP or a maximum channel occupancy time (MCOT), other parameter, or subframe boundary, for example.

In an aspect, a UE operating on an unlicensed / licensed spectrum can generate an LBT protocol (e.g., a category 4 LBT or a clear channel assessment with a single LBT interval) based on the LBT priority class assigned and switch between different types of LBT protocols based on the indications of a DL transmission and different traffic flows or elements of data within the DL transmission. The DL transmission, for example, can include a set of LBT parameters (e.g., an MCOT or the like), one or more UL grants, the type of LBT for the UE to perform before a UL transmission, PDCCH or other data, each with corresponding LBT priority classes. As such, the UE can schedule LBT operations and UL transmissions based on the data / traffic within the DL transmission.

According to standard agreements (e.g., 3GPP Release-13 LAA or other agreement), a DL burst transmission is preceded by a category 4 LBT operation protocol (or cat 4 LBT), which includes a clear channel assessment and an exponential random backoff procedure at the eNB, which is a longer LBT operation than a single interval LBT as a CCA. The category 4 LBT can also be assigned any one of the LBT priority classes by which to utilize corresponding parameters. The single interval LBT could have no assigned priority class, for example. 3GPP Release-13 LAA design restricts the maximum channel occupancy time (MCOT) or the TxOP after completion of LBT at the eNB to be 8 ms (if LAA co-exists with WiFi) or 10ms (otherwise). An MCOT or TxOP is expected to include the DL subframe(s) from the eNB and the UL transmissions from UEs associated with the corresponding eNB. However, UL performance in unlicensed spectrum can be significantly degraded, essentially starving out or preventing UL transmissions within the same TxOP. The main cause of this UL starvation is due to the double LBT requirements at both eNB when sending the UL grant and at the scheduled UEs before transmission, whereby complete or longer LBT processes (e.g., category 4 LBT protocols) are being conducted twice for the same TxOP, at least once completely by the eNB and once by the UE. This can be a problem when a scheduled system (e.g., LTE) coexists with a non-scheduled autonomous system (e.g., Wi-Fi). Additionally, another particular limitation imposed on LTE systems includes a 4-subframe processing delay that restrict the initial four subframes in a transmission burst from being configured to UL, as such the UL grants are unavailable for those subframes within the same transmission burst.

Embodiments herein, such as transmitting the UL grant with a high LBT priority class and enabling cross-TxOP scheduling with indications of the associated type of LBT to perform where UL grant only transmission occur can serve to address the UL starvation issue and increase UL transmission opportunities. Additional aspects and details of the disclosure are further described below with reference to figures.

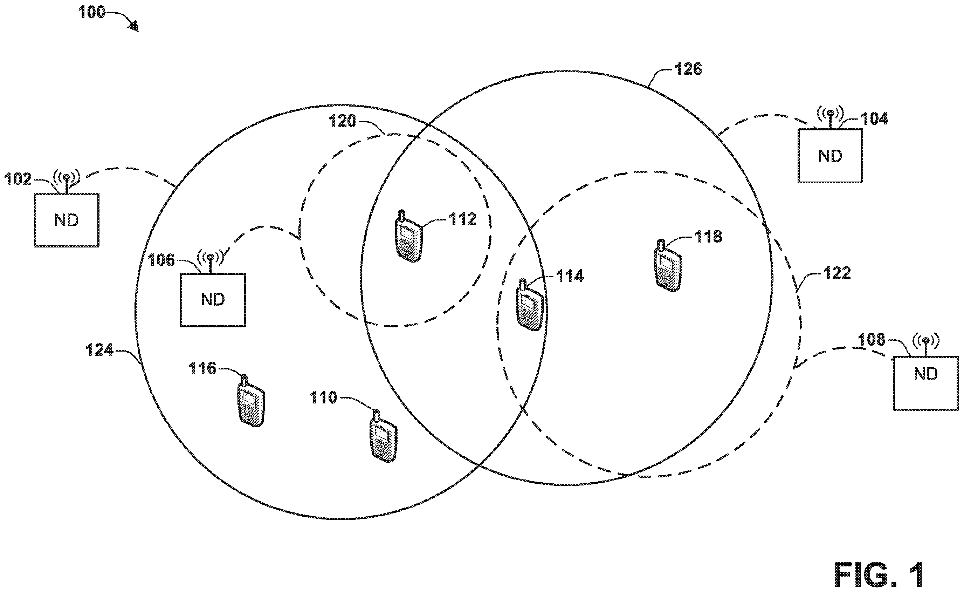

**FIG. 1** illustrates an example non-limiting wireless communications environment 100 that can enable dynamic assignment of LBT priority classes to elements or traffic of a DL transmission. Additionally, a UL grant only transmission, without PDSCH can schedule UL subframes in another TxOP that is outside of the TxOP of the UL grant and provide an indication of or specify a type of LBT operation to perform (e.g., cat 4 LBT or single interval LBT as a CCA) or that has been performed by an eNB, for example.

Further, UL scheduling grant information can be indicated to a UE (e.g., UEs 110, 112, 114, 116, or 118) by dedicated downlink control information within a DL transmission (e.g., a PDCCH transmission). In particular, DCI Format 0 / 0a / 0b (as defined in 3GPP standards) can be used for the transmission of resource grants for the physical uplink shared channel (PUSCH) and can include resource assignment and frequency hopping flag(s), a modulation and coding scheme (MCS), a new data indicator (NDI), hybrid automatic repeat request (HARQ) information and redundancy version (RV), power control command for scheduled PUSCH, cyclic shift for uplink demodulation reference signal (DM-RS), a request for transmission of an aperiodic channel quality indicator (CQI) report, or the like. Format 4 / 4a / 4b can be used, for example, when the UE 110 is configured in PUSCH transmission mode 2 for uplink single-user multiple input multiple output (MIMO) and can include MCS and NDI information for a second transport block and precoding information in addition to what can be included in Format 0 DCI. After transmission of the UL grant in subframe n, the UE 110 can be expected to transmit PUSCH after a subframe (e.g., indexed n+4) taking into account a 3ms UE processing of a four subframe delay for PDCCH reception, for example.

In LAA, the existing UL scheduling mechanisms (e.g., 3GPP Release 12) can be utilized. However, the UL grant transmission can also desire LBT on the carrier over which the PUSCH transmission can take place, either self-scheduled or cross-carrier scheduled. In addition, scheduled UE may also perform additional LBT before the actual transmission of PUSCH to reduce a hidden node effect or due to regulatory requirements. Such duplicated LBT for UL transmission can possibly reduce UL LAA performance in comparison to the UL performance of co-existing non-scheduled based WiFi-like deployments, in which embodiments herein can alleviate.

Wireless communications environment 100 can include one or more cellular broadcast servers or macro cell network devices 102, 104 (e.g., base stations, eNBs, access points (APs) or the like) as well as one or more other network devices such as small cell network devices or APs (e.g., small eNBs, micro-eNBs, pico-eNBs, femto-eNBs, home eNBs (HeNBs), or Wi-Fi nodes) 106, 108 deployed within the wireless communications environment 100 and servicing one or more UE devices 110, 112, 114, 116, 118 for wireless communications. Each wireless communications network (e.g., cellular broadcast servers 102, 104 and small cell network devices 106, 108) can comprise one or more network devices (e.g., a set of network devices (NDs)) that operate in conjunction in order to process network traffic for the one or more wireless / mobile devices or UE devices 110, 112, 114, 116, or 118. For example, macro cell NDs 102, 104 can comprise a set of network devices that are cellular enabled network devices. In another example, the small cell network devices 106, 108 can include a set of network devices that operate with a smaller coverage zone than the macro cell network devices 102 and 102, for example, or control similar coverage zones as the macro cell devices. As one of ordinary skill in the art can appreciate, this disclosure is not limited to any one network environment architecture / deployment.

Although NDs 106 and 108 are described as small cell network devices, they can also be Wi-Fi enabled devices or wireless local area network (WLAN) devices, as well as macro cell network devices, small cell network devices, or some other type of ND operable as a base station, eNB, or secondary cell network device for example. Alternatively, one or more of the macro cell NDs 102 and 104 could be small cell network devices or other NDs of a different radio access technology (RAT) that operate with different frequency carriers, for example.

As illustrated, each of the one or more Wi-Fi access points 106, 108, for example, can have a corresponding service area 120, 122. Additionally, each of the one or more cellular broadcast servers or macro cell NDs 102, 104 can have a corresponding service area 124, 126. However, it should be understood that the wireless communications environment 100 is not limited to this implementation. For example, any number of APs or NDs with respective service areas can be deployed within the wireless communications environment 100. Further, any number of cellular broadcast servers and respective service areas can be deployed within the wireless communications environment 100 as well.

Although only five UE devices 110, 112, 114, 116, 118 are illustrated, any number of UE devices can be deployed within the wireless communications environment 100 as well. A UE device can contain some or all of the functionality of a system, subscriber unit, subscriber station, mobile station, mobile, wireless terminal, network device, mobile device, remote station, remote terminal, access terminal, user terminal, terminal, wireless communication device, wireless communication apparatus, user agent, user device, or other ND, for example.

In an example scenario, UE devices 110, 112, 114, 116, 118 can be serviced by networks through one of the macro cell NDs 102, 104, or small cell NDs 106, 108. As a UE device moves within the wireless communications environment 100, the respective user equipment device could move in and out of the coverage area of the associated serving network. For example, as a user is sending / receiving communications through their respective UE device, the user might be walking, riding in a car, riding on a train, moving around a densely populated urban area (e.g., a large city), wherein the movement could cause the mobile device to be moved between various wireless communication networks. In such cases, it can be beneficial for the UE to route the network traffic (e.g., handoff) from a serving ND to a target ND in order to continue the communication (e.g., avoid dropped calls) or facilitate offloading for load distribution or other efficiency purposes, such as via LAA to unlicensed bands.

However as noted above, providing UL grants from the eNB 102 to a UE 116 for scheduling UL transmissions as part of a traffic flow on an unlicensed / licensed channel within the same TxOP can currently degrade UL access, especially where a double LBT protocol occurs with a category 4 LBT protocol at both the eNB and the UE. In addition, degradation can be further enhanced with a four subframe restriction in a transmission burst where the UL grants are unavailable for those initial four subframes within the same transmission burst. By enabling UL transmission to be scheduled in an outside TxOP from UL grants of a different TxOP, as well as transmitting the UL grant with a high LBT priority, the UL transmissions can be enabled earlier and be more efficient.

In an aspect, cellular broadcast servers or macro cell NDs 102, 104 and small cell NDs 106, 108 can monitor their surrounding radio conditions (e.g., by employing respective measurement components). For example, each of the macro cell NDs 102, 104 and small cell NDs 106, 108 can determine network traffic load on its respective network by performing a network diagnostic process. As an example, during a network listen procedure, such as a listen before talk (LBT) protocol / procedure macro cell NDs 102, 104, small cell NDs 106, 108 or UE devices 110, 112, 114, 116, 118 can scan their radio environment to determine network performance statistics or network parameters (e.g., frequency, SNR, signal quality, QoS, QoE, load, congestion, signal rate, etc.). Various parameters associated with macro cell NDs 102, 104, small cell NDs 106, 108, or UE devices 110, 112, 114, 116, 118 can be detected during the network diagnostic or LBT procedure or measurements, such as, but not limited to, frequency bands, scrambling codes, common channel pilot power, bandwidth across respective networks, universal mobile telecommunications system terrestrial radio access receive signal strength indicator, as well as frequency carrier priorities for particular cell groups (e.g., a normal group or a reduced group) and so on. As referred to herein, a category 4 LBT protocol / procedure can be longer than a single interval LBT or just a clear channel assessment and further include a backoff operation or procedure. For example, the category 4 LBT protocol can further include a random backoff procedure (e.g., an exponential random backoff procedure or the like) as opposed to a clear channel assessment alone that can comprise a single interval LBT (or short Cat 4 LBT) operation; whereby a puncturing of the first symbol of PUSCH transmission occurs as part of the channel assessment to determine a busy channel or an idle / available channel / band.

In one embodiment, the eNB 102 can generate the UL grant transmission as part of or entirely as a DL transmission, such as any one of DCI Formats 0a / 0b / 4a / 4b. As part of generating the DL transmission, the eNB 102 can assign an equal or lower LBT priority class, or equivalently an equal or higher LBT priority class than the DL grant transmission (or UL grant) to the UL grant of the DL transmission, such as DCI Formats 1 / 1A / 1B / 1C / 2 / 2A / 2B / 2C. This can improve the LAA UL performance so that if a DL transmission or transmission burst contains traffic (data or elements) corresponding to different LBT priority classes, the lowest priority can be used for or assigned to the LBT parameters.

In another embodiment, the eNB can assign data or traffic of a DL transmission to different LBT class priorities as well as select what LBT to utilize for the DL transmission. For example, a UL grant of the DL transmission can be assigned to LBT priority class 1, whereas a DL grant of the transmission can be assigned to LBT priority class 3. If the DL transmission burst contains only a UL grant, then the LBT priority class 1 parameters (e.g., CWmin=3, CWmax= 7, and n=1 as indicated in Table 1 above), can be used to perform an LBT operation or LBT protocol, via the eNB or the UE. Alternatively or additionally, if the DL transmission burst contains traffic corresponding to different LBT priority classes, then the LBT parameters of the lowest LBT priority class can be used for performing an LBT protocol on an unlicensed or licensed channel. For example, if the DL transmission burst contains a UL grant, DL grant and following PDSCH transmission data, then LBT priority class 3 parameters (e.g., CWmin=15, CWmax=63, and n=3) can be used to perform the LBT. These described operations herein can be applied to both self-scheduling and cross-carrier scheduling operation. If the DL transmission burst contains a UL grant, the LBT can also be performed on the carrier over which the assigned PUSCH transmission will take place.

In additional embodiments, a UL grant transmission can further be assigned to an LBT priority class based on a priority function such as LBT priority class max(C_{DL}-k, 1), where C_{DL} is the priority class set for the DL grant / DL grant transmission, or equivalently a PDSCH / PDSCH transmission. If C_{DL} is set to 3 and k is set to 1, for example, then the UL grant of the DL transmission can be assigned to the LBT priority class 2. The parameter k can be a positive integer. The remaining operation details, when DL transmission burst contains UL grant transmission or traffic corresponding to different LBT priority classes, can be similar to the operations as described in the above embodiments. The above described embodiments can be applied to both self-scheduling and cross-carrier scheduling cases also. If the DL transmission burst contains the UL grant, the LBT can also be performed on the carrier over which the assigned PUSCH transmission takes place.

In another embodiment, the eNB 102, for example, can enable cross-TxOP UL scheduling by scheduling potential UL subframes in a preceding transmission burst, and thus enable UL transmissions to begin earlier than otherwise within the transmission burst. For example, the eNB 102 can generate a DL transmission with one or more UL grants and one or more indications within a first TxOP that enables scheduling a UL transmission associated with a PUSCH or a PUCCH. An indication can include one or more bits or other indication. The indications can provide various different triggers or indicators to the UEs 110 or 116, such as whether to schedule the one or more UL transmissions within the first transmission opportunity or a second transmission opportunity that is outside of the first transmission opportunity. Other indications can be based on different signaling operations for TxOPs and UL grants that include various indications to various parameters of the TxOPs and LBT operations based on whether scheduling is indicated to be within the same TxOP as the UL grants or within a different TxOP. The indications can enable a UE to process the UL grants for scheduling based on different parameters (e.g., LBT parameters) and conditions (e.g., assigned LBT priority classes and corresponding traffic within the DL transmission). These indications can be signaled explicitly or implicitly. The indications can include a type of LBT to perform in response to the DL transmission being a UL grant only transmission, whereby just one or more UL grants are being transmitted without a PDSCH, for example. Depending on the LBT performed for the UL grant only transmission, the Maximum Channel Occupancy Time (MCOT) can be different, which could impact the LBT protocol / technique to be performed for the following UL transmission, which can be scheduled via cross-TxOP scheduling where the following UL transmission may be the start of a TxOP.

Depending on the LBT technique performed for the UL grant only transmission, the MCOT parameter can vary. Thus, the following UL transmission can belong to the same TxOP with the UL grant only transmission or belong to a different TxOP, which could impact the LBT techniques to be performed for the following UL transmission. Aspects of the instant disclosure include indication techniques for the information related to the UL grant only transmission, which can be utilized at UEs (e.g., UEs 110, 112, 114, 116, 118) to decide which LBT to perform before the UL transmission.

Additionally or alternatively, UL grant transmission can be transmitted with a single interval LBT, rather than using one of the priority classes mentioned in Table 1. In the single interval LBT, before the transmission of DL burst containing UL grant, the eNB 102 can sense or assess a given channel (whether licensed or unlicensed) for a fixed period (e.g., a point coordination function (PCF) interframe space (PIFS) duration). If the channel is sensed to be idle, the DL transmission burst containing a UL grant is transmitted.

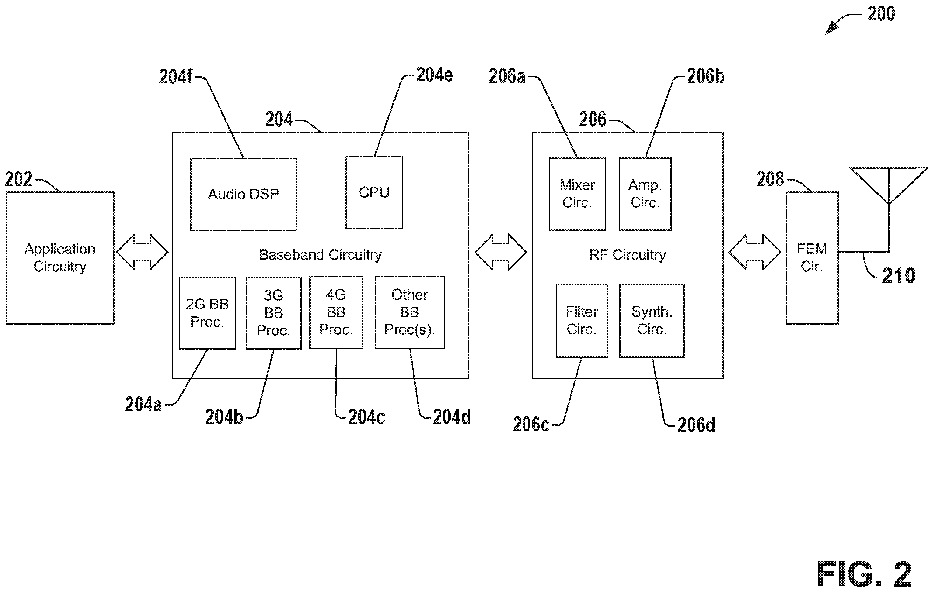

Embodiments described herein and further detailed in this disclosure can be implemented into an example system using any suitably configured hardware / software. **FIG. 2** illustrates, for one or more embodiments, example components of a cell network device 200, such as a base station, a macro cell network device, a secondary cell network device, a small cell network device, an eNB, or any other network device (e.g. a user equipment, pico cell, Femto cell or the like) that can be used on a wireless network to generate or process signaling for scheduling transmissions. In some embodiments, the cell network device 200 can include application circuitry 202, baseband circuitry 204, Radio Frequency (RF) circuitry 206, front-end module (FEM) circuitry 208 and one or more antennas 210, coupled together at least as shown.

The application circuitry 202 can include one or more application processors. For example, the application circuitry 202 can include circuitry such as, but not limited to, one or more single-core or multi-core processors. The processor(s) can include any combination of general-purpose processors and dedicated processors (e.g., graphics processors, application processors, etc.). The processors can be coupled with and/or can include memory / storage and can be configured to execute instructions stored in the memory/storage to enable various applications and/or operating systems to run on the system.

The baseband circuitry 204 can include circuitry such as, but not limited to, one or more single-core or multi-core processors. The baseband circuitry 204 can include one or more baseband processors and/or control logic to process baseband signals received from a receive signal path of the RF circuitry 206 and to generate baseband signals for a transmit signal path of the RF circuitry 206. Baseband processing circuity 204 can interface with the application circuitry 202 for generation and processing of the baseband signals and for controlling operations of the RF circuitry 206. For example, in some embodiments, the baseband circuitry 204 can include a second generation (2G) baseband processor 204a, third generation (3G) baseband processor 204b, fourth generation (4G) baseband processor 204c, and/or other baseband processor(s) 204d for other existing generations, generations in development or to be developed in the future (e.g., fifth generation (5G), 6G, etc.). The baseband circuitry 204 (e.g., one or more of baseband processors 204a-d) can handle various radio control functions that enable communication with one or more radio networks via the RF circuitry 206. The radio control functions can include, but are not limited to, signal modulation/demodulation, encoding/decoding, radio frequency shifting, etc. In some embodiments, modulation/demodulation circuitry of the baseband circuitry 204 can include Fast-Fourier Transform (FFT), precoding, and/or constellation mapping / demapping functionality. In some embodiments, encoding/decoding circuitry of the baseband circuitry 204 can include convolution, tail-biting convolution, turbo, Viterbi, and/or Low Density Parity Check (LDPC) encoder/decoder functionality. Embodiments of modulation/demodulation and encoder/decoder functionality are not limited to these examples and can include other suitable functionality in other embodiments.

In some embodiments, the baseband circuitry 204 can include elements of a protocol stack such as, for example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. A central processing unit (CPU) 204e of the baseband circuitry 204 can be configured to run elements of the protocol stack for signaling of the PHY, MAC, RLC, PDCP and/or RRC layers of an Open Systems Interconnection (OSI) model.. In some embodiments, the baseband circuitry can include one or more audio digital signal processor(s) (DSP) 204f. The audio DSP(s) 204f can be include elements for compression/decompression and echo cancellation and can include other suitable processing elements in other embodiments. Components of the baseband circuitry can be suitably combined in a single chip, a single chipset, or disposed on a same circuit board in some embodiments. In some embodiments, some or all of the constituent components of the baseband circuitry 204 and the application circuitry 202 can be implemented together such as, for example, on a system on a chip (SOC).

In some embodiments, the baseband circuitry 204 can provide for communication compatible with one or more radio technologies. For example, in some embodiments, the baseband circuitry 204 can support communication with a EUTRAN and/or other wireless metropolitan area networks (WMAN), a wireless local area network (WLAN), a wireless personal area network (WPAN). Embodiments in which the baseband circuitry 204 is configured to support radio communications of more than one wireless protocol can be referred to as multi-mode baseband circuitry.

RF circuitry 206 can enable communication with wireless networks using modulated electromagnetic radiation through a non-solid medium. In various embodiments, the RF circuitry 206 can include switches, filters, amplifiers, etc. to facilitate the communication with the wireless network. RF circuitry 206 can include a receive signal path which can include circuitry to down-convert RF signals received from the FEM circuitry 208 and provide baseband signals to the baseband circuitry 204. RF circuitry 206 can also include a transmit signal path which can include circuitry to up-convert baseband signals provided by the baseband circuitry 204 and provide RF output signals to the FEM circuitry 208 for transmission.

In some embodiments, the RF circuitry 206 can include a receive signal path and a transmit signal path. The receive signal path of the RF circuitry 206 can include mixer circuitry 206a, amplifier circuitry 206b and filter circuitry 206c. The transmit signal path of the RF circuitry 206 can include filter circuitry 206c and mixer circuitry 206a. RF circuitry 206 can also include synthesizer circuitry 206d for synthesizing a frequency for use by the mixer circuitry 206a of the receive signal path and the transmit signal path. In some embodiments, the mixer circuitry 206a of the receive signal path can be configured to down-convert RF signals received from the FEM circuitry 208 based on the synthesized frequency provided by synthesizer circuitry 206d. The amplifier circuitry 206b can be configured to amplify the down-converted signals and the filter circuitry 206c can be a low-pass filter (LPF) or band-pass filter (BPF) configured to remove unwanted signals from the down-converted signals to generate output baseband signals. Output baseband signals can be provided to the baseband circuitry 204 for further processing. In some embodiments, the output baseband signals can be zero-frequency baseband signals, although this is not a requirement. In some embodiments, mixer circuitry 206a of the receive signal path can comprise passive mixers, although the scope of the embodiments is not limited in this respect.

In some embodiments, the mixer circuitry 206a of the transmit signal path can be configured to up-convert input baseband signals based on the synthesized frequency provided by the synthesizer circuitry 206d to generate RF output signals for the FEM circuitry 208. The baseband signals can be provided by the baseband circuitry 204 and can be filtered by filter circuitry 206c. The filter circuitry 206c can include a low-pass filter (LPF), although the scope of the embodiments is not limited in this respect.

In some embodiments, the mixer circuitry 206a of the receive signal path and the mixer circuitry 206a of the transmit signal path can include two or more mixers and can be arranged for quadrature down-conversion or up-conversion respectively. In some embodiments, the mixer circuitry 206a of the receive signal path and the mixer circuitry 206a of the transmit signal path can include two or more mixers and can be arranged for image rejection (e.g., Hartley image rejection). In some embodiments, the mixer circuitry 206a of the receive signal path and the mixer circuitry 206a can be arranged for direct down-conversion or direct up-conversion, respectively. In some embodiments, the mixer circuitry 206a of the receive signal path and the mixer circuitry 206a of the transmit signal path can be configured for super-heterodyne operation.

In some embodiments, the output baseband signals and the input baseband signals can be analog baseband signals, although the scope of the embodiments is not limited in this respect. In some alternate embodiments, the output baseband signals and the input baseband signals can be digital baseband signals. In these alternate embodiments, the RF circuitry 206 can include analog-to-digital converter (ADC) and digital-to-analog converter (DAC) circuitry and the baseband circuitry 204 can include a digital baseband interface to communicate with the RF circuitry 206.

In some dual-mode embodiments, a separate radio IC circuitry can be provided for processing signals for each spectrum, although the scope of the embodiments is not limited in this respect.

In some embodiments, the synthesizer circuitry 206d can be a fractional-N synthesizer or a fractional N/N+2 synthesizer, although the scope of the embodiments is not limited in this respect as other types of frequency synthesizers can be suitable. For example, synthesizer circuitry 206d can be a delta-sigma synthesizer, a frequency multiplier, or a synthesizer comprising a phase-locked loop with a frequency divider.

The synthesizer circuitry 206d can be configured to synthesize an output frequency for use by the mixer circuitry 206a of the RF circuitry 206 based on a frequency input and a divider control input. In some embodiments, the synthesizer circuitry 206d can be a fractional N/N+2 synthesizer.

In some embodiments, frequency input can be provided by a voltage controlled oscillator (VCO), although that is not a requirement. Divider control input can be provided by either the baseband circuitry 204 or the applications processor 202 depending on the desired output frequency. In some embodiments, a divider control input (e.g., N) can be determined from a look-up table based on a channel indicated by the applications processor 202.

Synthesizer circuitry 206d of the RF circuitry 206 can include a divider, a delay-locked loop (DLL), a multiplexer and a phase accumulator. In some embodiments, the divider can be a dual modulus divider (DMD) and the phase accumulator can be a digital phase accumulator (DPA). In some embodiments, the DMD can be configured to divide the input signal by either N or N+2 (e.g., based on a carry out) to provide a fractional division ratio. In some example embodiments, the DLL can include a set of cascaded, tunable, delay elements, a phase detector, a charge pump and a D-type flip-flop. In these embodiments, the delay elements can be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 206d can be configured to generate a carrier frequency as the output frequency, while in other embodiments, the output frequency can be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency can be a LO frequency (fLO). In some embodiments, the RF circuitry 206 can include an IQ/polar converter.

FEM circuitry 208 can include a receive signal path which can include circuitry configured to operate on RF signals received from one or more antennas 210, amplify the received signals and provide the amplified versions of the received signals to the RF circuitry 206 for further processing. FEM circuitry 208 can also include a transmit signal path which can include circuitry configured to amplify signals for transmission provided by the RF circuitry 206 for transmission by one or more of the one or more antennas 210.

In some embodiments, the FEM circuitry 208 can include a TX/RX switch to switch between transmit mode and receive mode operation. The FEM circuitry can include a receive signal path and a transmit signal path. The receive signal path of the FEM circuitry can include a low-noise amplifier (LNA) to amplify received RF signals and provide the amplified received RF signals as an output (e.g., to the RF circuitry 206). The transmit signal path of the FEM circuitry 208 can include a power amplifier (PA) to amplify input RF signals (e.g., provided by RF circuitry 206), and one or more filters to generate RF signals for subsequent transmission (e.g., by one or more of the one or more antennas 210.

In some embodiments, the cell network device 200 can include additional elements such as, for example, memory/storage, display, camera, sensor, and/or input/output (I/O) interface. In some embodiments, the electronic device of Figure 2 may be configured to perform one or more processes, techniques, and/or methods as described herein, or portions thereof.

In an embodiment, the network device as an eNB 200 can operate to multiplexing different LBT priority classes corresponding to different traffic or data elements (e.g. UL grant, DL grant, PDSCH or the like) within a DL burst so that a particular, single DL transmission can include different traffic / data / elements with different LBT priority classes. For example, a DL transmission can include a UL grant, a DL grant, a PDSCH, LBT parameters, indications for performing an LBT protocol, as well as corresponding LBT priority classes assigned to each. As such, a DL burst can be generated, for example, by multiplexing a UL grant and PDSCH with the same or different LBT priority classes. The eNB 102 can thus generate multiplexing different priority classes covering the case of the transmission of the UL grant and PDSCH. The lowest LBT priority, in this case can be used for the LBT parameters before transmission of a DL burst containing a UL grant. As another embodiment, the eNB 102 can generate a DL transmission burst first with frequency first scheduling using traffic or data with the same or higher priority than the UL grant, and any leftover resources (e.g., bandwidth, time, frequency, etc.) in the frequency domain can then be filled by lower LBT priority traffic without increasing the time-domain resources of the transmission. This can increase the probability of the successful transmission of the UL grant. Additionally or alternatively, if the UL grant is transmitted by the eNB 102 with a single interval LBT, a UL grant and PDSCH would not be multiplexed and the UL grant could be transmitted by itself as a UL grant only transmission, which can increase the probability of the transmission of the UL grant.

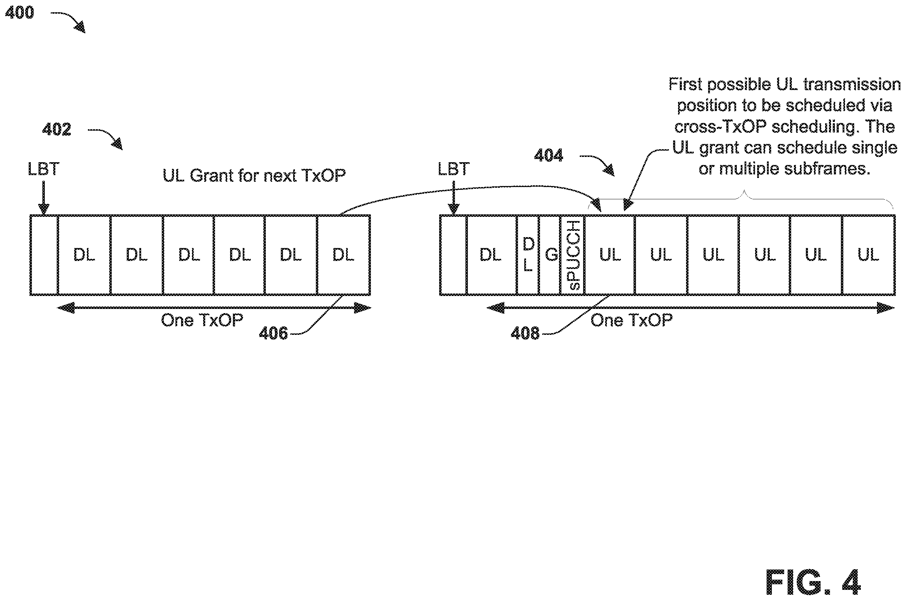

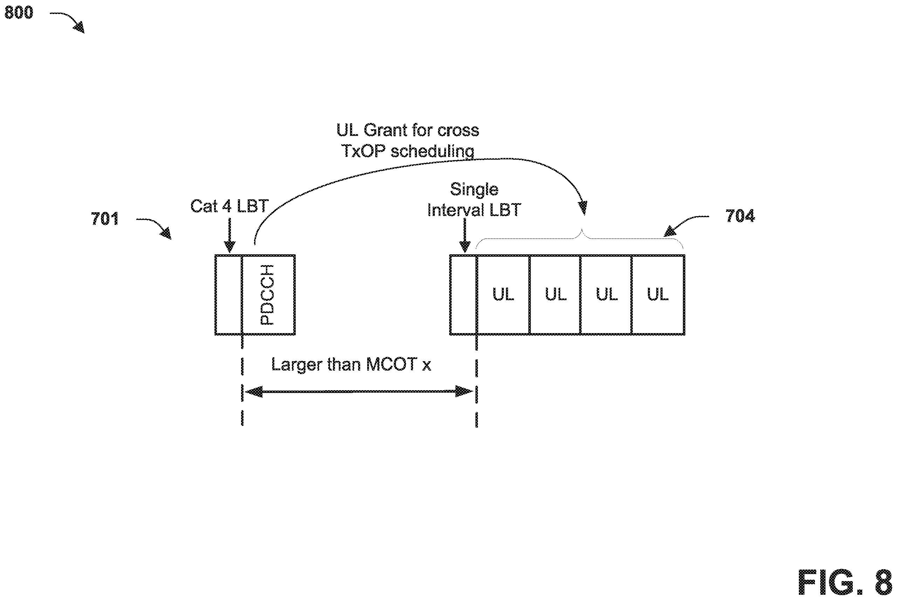

In other embodiments, the network device 200 (e.g., as an eNB 102) can operate to generate cross-TxOP signaling operations that involved transmission scheduling outside of a TxOP or within the same TxOP when the UL grant is transmitted alone or without traffic of any other LBT priority class. Various LBT parameters (e.g., the MCOT, contention window minimums and maximum, or other related parameters) can be processed for these scheduling operations and used with communications on a network to enable more efficient and flexible scheduling according to the LBT priority class within each DL transmission. Additionally details in FIGs. 4-12, for example, demonstrate examples for indications in LAA or cross-TxOP scheduling for UL grant only transmission and associated LBT indications or indicators.

In one example, an eNB 200 can configure the LBT priority classes for the DL transmission burst by setting / assigning different priority classes for uplink (UL) grants or UL grant transmissions therein. For example, the different priority classes can be assigned differently to a UL grant, a DL grant, a PDSCH, LBT parameters or other related parameters or indications associated with one or more subframes within the DL transmission. The eNB 102 can then manage the different LBT priority classes from among multiple classes or levels as indicated in Table 1, including a single interval LBT without any class when generating the DL transmission burst with traffic data or elements corresponding to different LBT priority classes.

The UL grant, for example, can be assigned an equal or lower priority class, or equivalently an equal or higher priority, than the DL grant / DL grant transmission. For example, a UL grant transmission can be assigned to LBT priority class 1, whereas the DL grant can be assigned to an LBT priority class of 3. Thus, the UL grant has a higher LBT priority class than the DL grant within the DL transmission.

In an aspect, the eNB 200 can assign the UL grant to an LBT priority class or level based on a function of the DL grant or other data (e.g., a PDSCH) within the DL transmission such as an LBT priority class max(CDL-k,1), where CDL is the priority class set for the DL grant or equivalently a PDSCH of the DL transmission, and k is a positive integer. The UL grant can be of the form of downlink control information (DCI) Format 0a / 0b / 4a / 4b, and the DL grant transmission can be of the form of DCI Format 1 / 1A / 1B / 1C / 2 / 2A / 2B / 2C.

The eNB can generate DL transmission burst containing traffic corresponding to different LBT priority classes when multiplexing data to generate the transmission, with the lowest priority from within the DL transmission being used for the LBT parameters (e.g., LBT priority class 4 or otherwise). If the DL transmission burst is generated with only a UL grant, then the LBT priority class of UL grant can be used to perform LBT on the unlicensed or licensed channel. The embodiments in this disclosure can be used with self-scheduling or cross-carrier scheduling operations as well.

Further, other indications can be provided for a type of LBT protocols to be performed for UL transmission with cross-TxOP scheduling or scheduling within the same TxOP as the DL transmission.

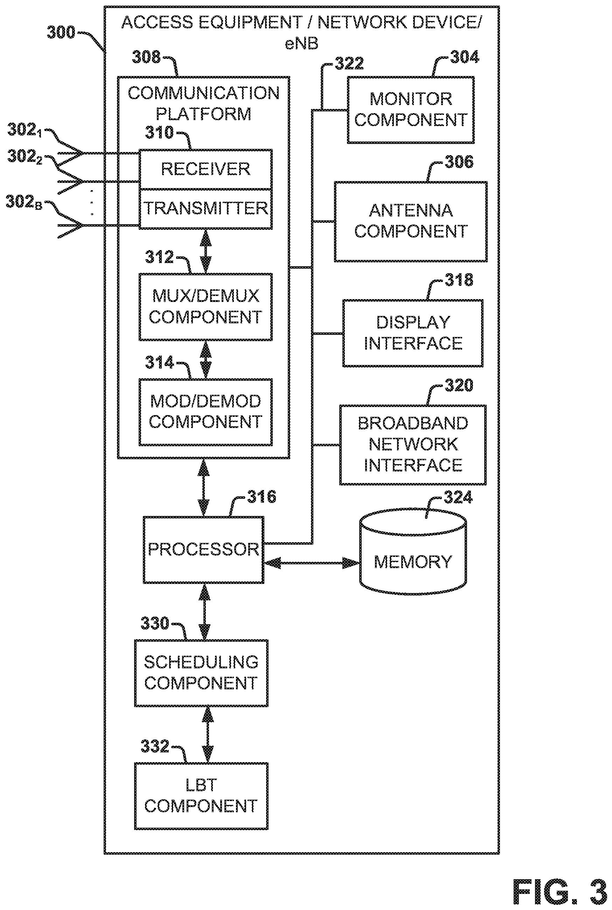

**FIG. 3** further illustrates an embodiment of a network device or system 300 to be employed in an eNB, a UE or other network device that facilitates or enables signaling mechanisms to generate DL transmission with traffic associated with different LBT priority classes. In addition, indications can be processed or generated to indicate cross-Tx OP signaling, in which one or more UL grants transmitted within a TxOP can schedule UL transmissions for a different TxOP. System or device 300 can include the baseband circuitry component 204, the radio frequency (RF) circuitry component 206, or a front end module circuitry component 308 of **FIG. 2****,** as well as communication component or platform 308 with transmitter circuitry component(s) / receiver circuitry component 310 (e.g., a communication component), a processor 316, memory 324, a scheduling component 330 and an LBT component 332.

In various aspects, device 300 can be included within an Evolved Universal Terrestrial Radio Access Network (E-UTRAN) Node B (Evolved Node B, eNodeB, or eNB 102), other base station, network access point, a secondary cell network device (e.g., a small cell, or WiFi network device) or other cell network component/device (e.g., UE 116 and 110) in a wireless communications network (e.g., network 124). Memory 324 also can include instructions that can be implemented by processor 316, transmitter circuitry 310, or receiver circuitry 310 to implement various aspects or embodiments described herein.

Memory 324 can comprise one or more machine-readable medium / media including instructions that, when performed by a machine or component herein cause the machine to perform acts of the method or of an apparatus or system for concurrent communication using multiple communication technologies according to embodiments and examples described herein. It is to be understood that aspects described herein can be implemented by hardware, software, firmware, or any combination thereof. When implemented in software, functions can be stored on or transmitted over as one or more instructions or code on a computer-readable medium (e.g., the memory described herein or other storage device). Computer-readable media includes both computer storage media and communication media including any medium that facilitates transfer of a computer program from one place to another. A storage media or a computer readable storage device can be any available media that can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or other tangible and/or non-transitory medium, that can be used to carry or store desired information or executable instructions. Also, any connection is properly termed a computer-readable medium. For example, if software is transmitted from a website, server, or other remote source using a coaxial cable, fiber optic cable, twisted pair, digital subscriber line (DSL), or wireless technologies such as infrared, radio, and microwave, then coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where *disks* usually reproduce data magnetically, while *discs* reproduce data optically with lasers. Combinations of the above should also be included within the scope of computer-readable media.

Access equipment (e.g., eNB, network entity, or the like), UE or software related to access of the network device 300 can receive and transmit signal(s) from and to wireless devices, wireless ports, wireless routers, etc. through segments 302₁-302_{B} (B is a positive integer). Segments 302₁-302_{B} can be internal and/or external to access equipment and/or software related to access of a network, and can be controlled by a monitor component 304 and an antenna component 306. Monitor component 304 and antenna component 306 can couple to communication component 308, which can include electronic components and associated circuitry that provide for processing and manipulation of received signal(s) and other signal(s) to be transmitted.

In an aspect, communication component 308 includes the receiver/transmitter 310 that can convert analog signals to digital signals upon reception of the analog signals, and can convert digital signals to analog signals upon transmission. In addition, receiver / transmitter 310 can divide a single data stream into multiple, parallel data streams, or perform the reciprocal operation. Coupled to receiver/transmitter 310 can be a multiplexer / demultiplexer 312 that can facilitate manipulation of signals in time and frequency space. Multiplexer / demultiplexer 312 can multiplex information (data/traffic and control/signaling) according to various multiplexing schemes such as time division multiplexing, frequency division multiplexing, orthogonal frequency division multiplexing, code division multiplexing, space division multiplexing. In addition, multiplexer / demultiplexer component 312 can scramble and spread information (e.g., codes, according to substantially any code known in the art, such as Hadamard-Walsh codes, Baker codes, Kasami codes, polyphase codes, and so forth).

A modulator / demodulator 314 can also be a part of communication component / platform 308, and can modulate information according to multiple modulation techniques, such as frequency modulation, amplitude modulation (e.g., Mary quadrature amplitude modulation, with M a positive integer); phase-shift keying; and so forth).

Access equipment or software related to access of a network also includes a processor 316 (or processor component) configured to confer, at least in part, functionality to substantially any electronic component in access equipment / software. In particular, processor 316 can facilitate configuration of access equipment and/or software through, for example, monitor component 304, antenna component 306, and one or more components therein. Additionally, access equipment and/or software can include display interface 318, which can display functions that control functionality of access equipment and/or software or reveal operation conditions thereof. In addition, display interface 318 can include a screen to convey information to an end user. In an aspect, display interface 318 can be a liquid crystal display, a plasma panel, a monolithic thin-film based electrochromic display, and so on. Moreover, display interface 318 can include a component (e.g., speaker) that facilitates communication of aural indicia, which can also be employed in connection with messages that convey operational instructions to an end user. Display interface 318 can also facilitate data entry (e.g., through a linked keypad or through touch gestures), which can cause access equipment and/or software to receive external commands (e.g., restart operation).

Broadband network interface 320 facilitates connection of access equipment or software to a service provider network (not shown) that can include one or more cellular technologies (e.g., third generation partnership project universal mobile telecommunication system, global system for mobile communication, and so on) through backhaul link(s) (not shown), which enable incoming and outgoing data flow. Broadband network interface 320 can be internal or external to access equipment and/or software and can utilize display interface 318 for end-user interaction and status information delivery.

Processor 316 can be functionally connected to communication platform 308 and can facilitate operations on data (e.g., symbols, bits, or chips) for multiplexing / demultiplexing, such as enabling direct and inverse fast Fourier transforms, selection of modulation rates, selection of data packet formats, inter-packet times, and so on. Moreover, processor 316 can be functionally connected, through data, system, or an address bus 322, to display interface 318 and broadband network interface 320, to confer, at least in part, functionality to each of such components.

In access equipment and/or software memory 324 can retain location and/or coverage area (e.g., macro sector, identifier(s)) access list(s) that authorize access to wireless coverage through access equipment and/or software sector intelligence that can include ranking of coverage areas in the wireless environment of access equipment and/or software, radio link quality and strength associated therewith, or the like. Memory 324 also can store data structures, code instructions and program modules, system or device information, code sequences for scrambling, spreading and pilot transmission, access point configuration, and so on. Processor 316 can be coupled (e.g., through a memory bus), to memory 324 in order to store and retrieve information used to operate and/or confer functionality to the components, platform, and interface that reside within access equipment and/or software.

The network device 300, system, component or device herein can be incorporated into or otherwise part of, an eNB, a UE, or some other type of electronic device in accordance with various embodiments. Specifically, the electronic device or components or interfaces described herein can be logic and/or circuitry that can be at least partially implemented in one or more of hardware, software, or firmware. In some embodiments, the electronic device logic can include radio transmit logic and receive logic (e.g., 310) coupled to control logic (e.g., processor 316). Additionally or alternatively, transmit / receive logic can comprise elements or modules of transceiver logic 310. The electronic device, component(s), circuitry or interfaces of such electronic device can be configured to perform operations similar to those described elsewhere in this disclosure.

In one embodiment, the processor 316, the communication platform / component 308, or the scheduling component 330 can generate or process cross-TxOP signaling operations within a wireless network. The communication component 330, for example, is configured to process communication signals on an unlicensed / unlicensed band to facilitate these signaling operations by generating, processing, receiving or transmitting one or more UL grants and indications for scheduling on 1) the same TxOP as a corresponding UL grant, or 2) on a different TxOP that is outside or external to the TxOP of the one or more UL grants. Furthermore, the DL transmission can be processed via a UE (e.g., UE 110 or 300) according to traffic or elements within the DL transmission having different LBT priority classes therein, in which a UL grant can have a different LBT priority class from a DL grant of the DL transmission, or from a PDSCH, for example.

UEs scheduled within a same TxOP can be provided an indication or trigger to perform a single interval LBT (e.g., a short category 4 LBT with just a clear channel assessment) by puncturing a first symbol of PUSCH transmission. Likewise, when scheduled in another TxOP, the UEs can be provided an indication or a trigger to perform a category 4 LBT protocol that is longer in duration than the short single interval LBT, and further includes a clear channel assessment and a random backoff procedure. This indication can be provided as one or more bits explicitly or implicitly where given one or more conditions the LBT component 332 is triggered or pre-configured to know whether to implement a complete category 4 procedure or a singled interval LBT as only a clear channel assessment without a random backoff procedure.

For example, the LBT component 232 can perform a category 4 LBT protocol in response to the one or more indications of the DL transmission indicating to schedule the one or more UL transmissions within the second transmission opportunity, or where the DL transmission only has a UL grant without other traffic data or elements such as a DL grant or PDSCH.

In another embodiment, the scheduling component 330 can generate cross-TxOP scheduling with a DL transmission that comprises one or more UL grants and associated scheduling indications within a first transmission opportunity. The UL grants and associated indications can be provided or generated within a DL subframe and operate to schedule multiple UL subframes by one or more UEs (e.g., UE devices 110, 112, 114, 116, 118) or just a single UE. The indications can be bits or data with explicit triggers as well as depend on signaling conditions, such as whether multiple UEs are scheduled in the UL grant or DL subframe for scheduling or only one single UE. The indications can enable different scheduling operations for UL transmissions associated with a PUSCH, a PUCCH or other physical channel based on whether multiple UEs or a single UE is being scheduled, as well as based on whether a cross-TxOP is being scheduled together with or alternatively a UL grant only DL transmission.

Referring briefly to **FIG. 4****,** illustrated is an example of cross-TxOP scheduling with a DL transmission. The TxOP 402 can provide UL grant(s) 406 to schedule a single subframe, or multiple subframes in a different TxOP 404 via a subframe 406 of the DL transmission. In this embodiment, the presence of a potential PUSCH transmission can be indicated by the UL grant in the previous TxOP 402, which can operate to indicate cross-TxOP scheduling on a different TxOP with UL subframes 404 than the TxOP that the UL grant(s) are transmitted on for the UE 110 to schedule UL transmissions. The first UL 408 transmission position can be scheduled in the TxOP 404 by the UL grant in a subframe 406 (not necessarily the last DL subframe as illustrated) that is in the previous TxOP 402 corresponding to the DL transmission. As such, the eNB 102 (or network device 200 or 300) can schedule UL grants within the same TxOP 402 or as illustrated in the transmissions 400 in outside TxOPs 404 for a cross-TxOP scheduling with multi-subframes for UL scheduling. Although a single UL subframe 406 or UL grant is illustrated to schedule multiple UL subframes 404, the UL subframe or a UL grant can also be configured to schedule a single subframe for UL transmission.

With the support of cross-TxOP scheduling, the eNB 102 (e.g., network device 200, or 300 as an eNB) can provide a UL grant only transmission, a transmission without physical downlink shared channel (PDSCH), which can enable scheduling a UL transmission in the same TxOP 402 or the following TxOP 404 by a UE 110 (e.g., network device 200, 300 as a UE).

Depending on the LBT performed for the UL grant only transmission, the Maximum Channel Occupancy Time (MCOT) can be different, which could also impact the LBT technique that is to be performed for the following UL transmission. In the example transmissions 400, a category 4 LBT or LBT of a different priority class can be performed by the eNB 102, for example, before transmission in the first TxOP 402. A UE (e.g., 110 or 116) can be indicated explicitly whether the subframe scheduled by UL grant 406 is within TxOP 402 or an outside TxOP 404, as well the type of LBT that has been performed by the eNB or that could be performed by the UE. The UE 110 can also be provided an indication of the type of LBT to be performed by UE, before its transmission scheduling operations in another TxOP 404 such as a category 4 LBT or a single interval LBT that is shorter that a category 4 LBT. Before the transmission of the PUSCH transmission in the outside TxOP 404, for example, the UE 110 can perform 110 a Cat 4 LBT, while for the case when PUSCH is within the TxOP of DL transmission, a single interval LBT could be performed. The parameters for the Cat 4 LBT to be used are based on the priority class associated with the traffic scheduled for the UE, which can be provided by the eNB 102 accordingly.

The indication to the UE 110 of what LBT to perform before the transmission in the TxOP 404 can be implicit or explicit. An explicit indication, for example, can be one or more bits in the DL transmission or part of the UL grant therein. An implicit indication, for example, can be provided if cross-TxOP scheduling is triggered, or if scheduling is within the same TxOP as the UL grant. A single LBT interval as a CCA can be triggered where the UL grant schedules transmission within the same TxOP, and a category 4 LBT (or Cat 4 LBT) or other LBT with an associated LBT priority class can be generated where cross TxOP scheduling is triggered.

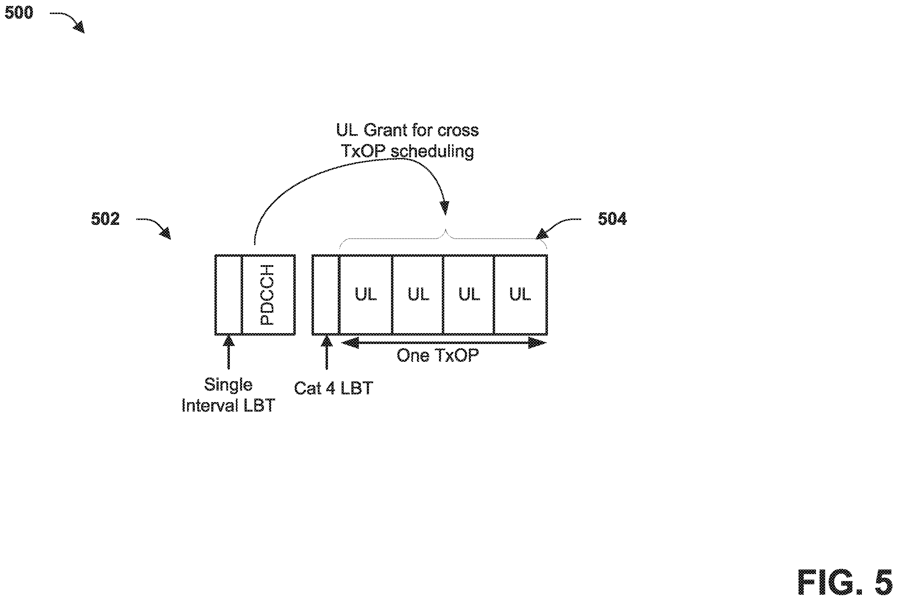

Referring to **FIGs. 5-6****,** illustrated are embodiments for a UL grant only transmission that schedules UL transmission where the eNB performs a single interval LBT. An eNB (e.g., 102) can determine what LBT protocol to perform. For example, the eNB 102 can perform a single interval LBT for an interval of point coordination function interframe space (PIFS, 25µs) or distributed coordination function interframe space (DIFS, 34µs) before the start of the UL grant only transmission 502, which is a UL grant transmission without PDSCH or a DL grant, for example. If there is a following transmission burst 504 starting with a UL subframe, as one embodiment, a category 4 LBT (or Cat 4 LBT) with priority class corresponding to the UL traffic can be performed before the following UL transmission.

**FIG. 5** illustrates an example of a UL grant only transmission 502 generated before the UL transmission 504. The UL grant only transmission by the eNB 102, for example, can follow a single interval LBT that is shorter in duration or length than a category 4 LBT. As a result of the single interval LBT or the cross-TxOP scheduling, the UE (e.g., 110) can be triggered to perform a category 4 LBT on the channel or band resource before transmitting UL transmission subframes in a different TxOP.

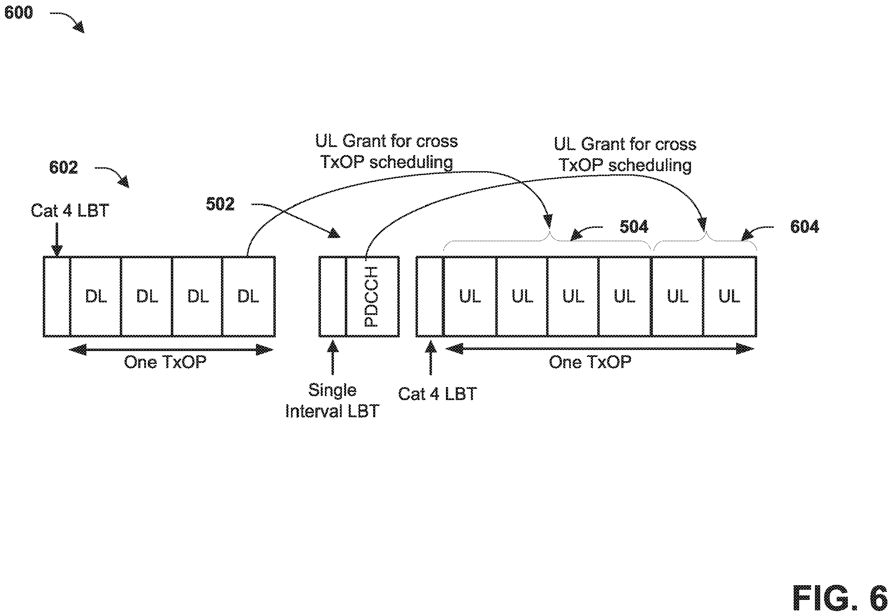

**FIG. 6** further illustrates the scheduling of UL transmissions 504 and 604 by a UL grant 602 and 502, respectively. The UL grant transmission 602 or 502 cab be transmitted in a TxOP before the UL grant only transmissions 502 or 604, for example. Here, cross-scheduling for the UL grant transmissions 502 or 604 can be enabled and indicate to the UE to perform a category 4 LBT before UL transmission of UL subframes.

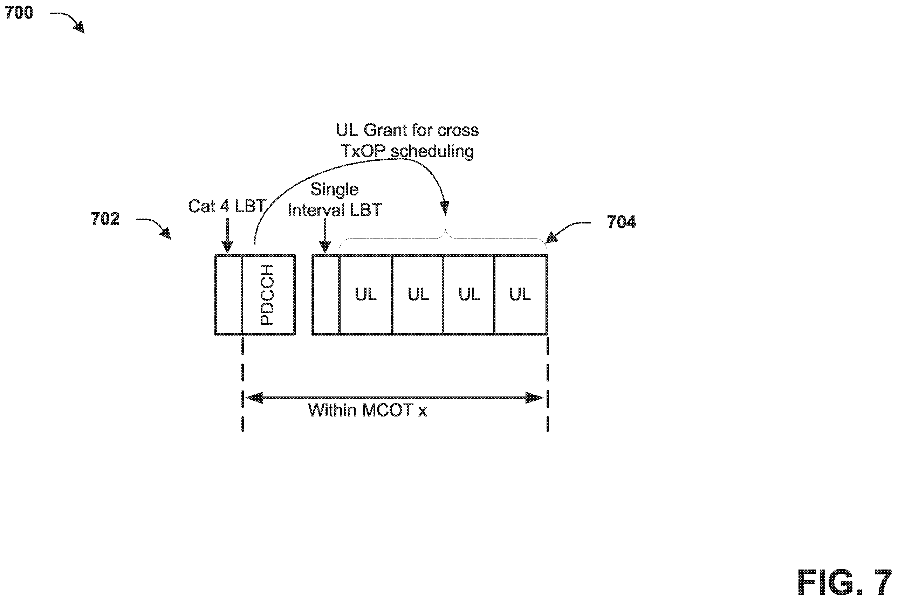

**FIGs. 7-8** illustrates embodiments for UL grants only transmissions that schedules following UL transmission. Here, the eNB 102, for example performs a category 4 LBT on the channel or band resource for a UL grant only transmission (e.g., PDCCH), where the category 4 LBT includes the clear channel assessment (CCA) and exponential backoff procedure as regular DL LBT procedure, which can have a longer duration than just a CCA as a single interval LBT. There are 4 LBT priority classes, as discussed above, each of which has different contention window sizes and MCOT values, in which is denoted by X with the MCOT X for the UL grant only transmission 702. If there is a following transmission burst (e.g., 704) starting with a UL subframe within duration of X as illustrated in **FIG. 7****,** a single interval LBT can be performed for the following UL transmission 704. Otherwise, a Cat-4 LBT can be performed for the following UL transmission starting with a UL subframe.

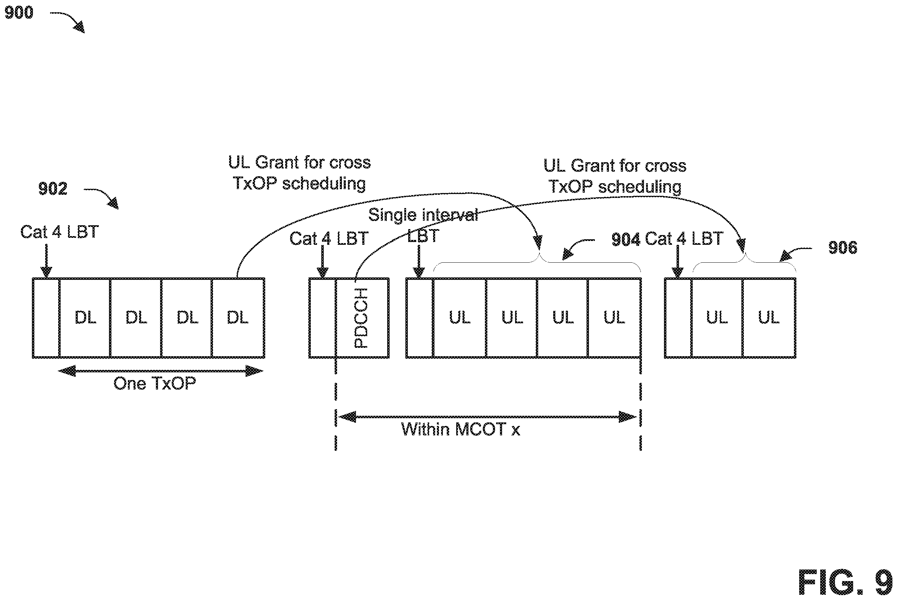

Referring to **FIGs. 9-11****,** illustrate related operations for enabling cross-TxOP when the eNB schedules a UE with fixed time relationship between grants and transmissions 900, 1000 and 1100. One or more indications such as an explicit eNB trigger can be present for enabling cross-TxOP scheduling and LBT priority classes for a UE (e.g., 110) to determine scheduling operation with transmission portions 904 or 906 in a second TxOP that correspond to the UL grant(s) in a portion of a TxOP 902 of **FIG. 9****.** Here, both scenarios of portions or subframes 904 being within the MCOT of the TxOP 902 and portion or subframes 906 being outside the MCOT x are shown, in which both portions or subframes of the transmissions are outside of the TxOP 902.

In some embodiments, before a PUSCH transmission the UE 110 is indicated if the subframe scheduled by UL grant is within TxOP or outside TxOP. This indication can also determine or trigger the type of LBT to be performed by the UE 110. Before the transmission of the PUSCH transmission outside TxOP in subframes 906, which is also outside of the MCOT x, the UE 110 can perform a cat 4 LBT. While for the case when PUSCH is outside the TxOP, but within the MCOT X, a single interval LBT is performed. In the subframe relationship 900, UL transmissions or subframe portions 904 within the same MCOT or TxOP are triggered or indicated with a single interval LBT to be performed before transmission by the UE 110, for example, while the PDCCH being scheduled outside of the MCOT or the TxOP is preceded by a category 4 LBT by the UE generating the UL transmission. Here, different data, UL grants or a PDCCH to a same UE can differ in the LBT protocol based on the parameters received where both are being cross-TxOP scheduled in TxOPs that are outside the UL grant only transmission or the DL transmission.

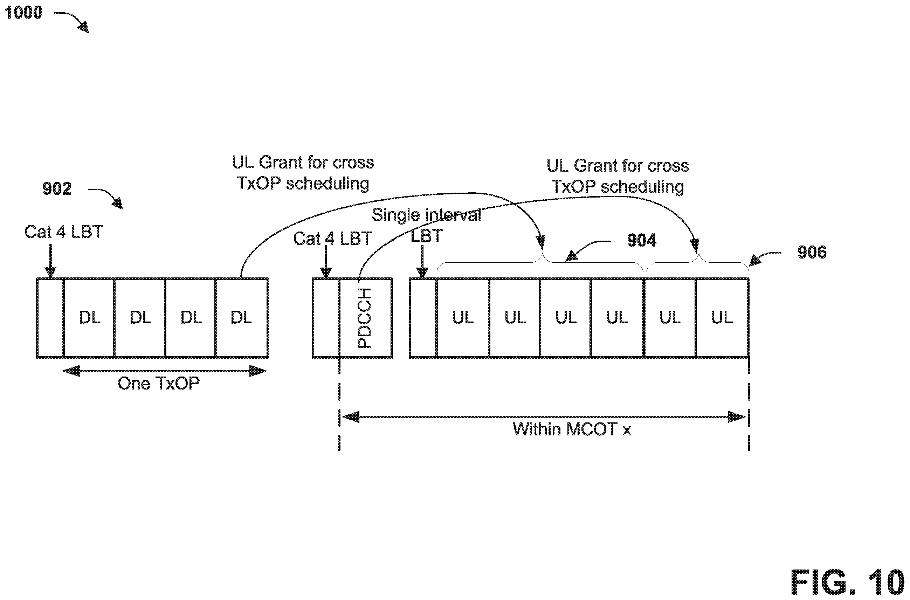

In the subframe relationship 1000 of **FIG. 10****,** all similar subframes are within the MCOT, regardless of being cross-TxOP as such UL grants and the PDCCH data being scheduled can receive an indication to be scheduled with only a single interval LBT before scheduling. This saves time and prevents the double LBT, where a complete category 4 LBT is not performed by both the eNB 102 and the UE 110.

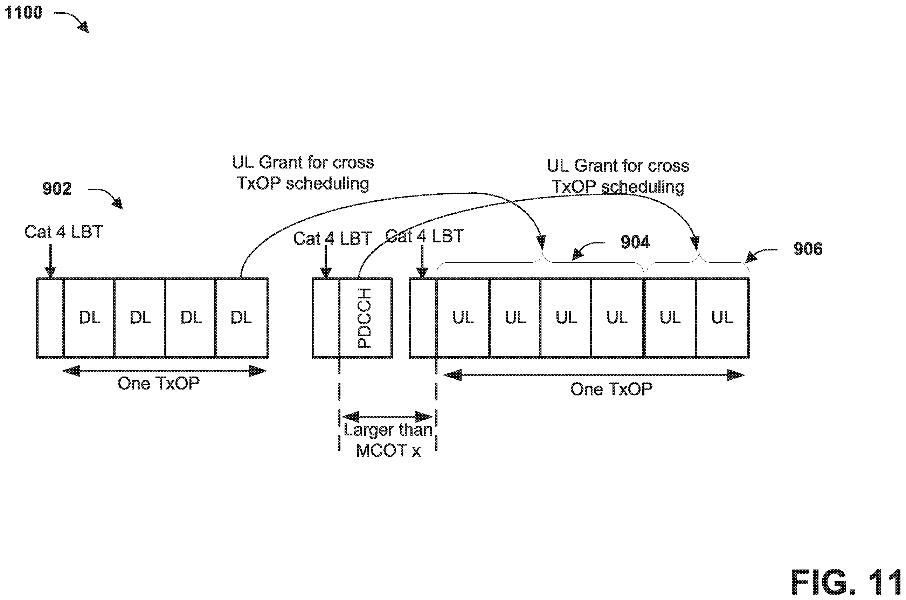

In the subframe relationship 1100 of **FIG. 11****,** all of the UL subframes 904 and 906 being scheduled by UL grants and PDCCH are scheduled for cross TxOP scheduling outside of the first TxOP and outside of the MCOT. As such, UL grants and PDCCH corresponding to UL subframes 904 and 906 can be scheduled on a different TxOP and outside of the MCOT X LBT parameters, and thus trigger or indicate to the UE a category 4 LBT to be performed before scheduling of any UL subframes. This indication can be implicit or explicitly indicated.

The parameters for the Cat 4 LBT to be used can be based on the priority class associated with the traffic scheduled for the UE 110, for example. The eNB 102 can explicitly indicate the Cat 4 LBT parameters to be used for performing UL LBT at the UE 110 as well as the particular LBT to be performed by the UE for transmission. Referring back to **FIG. 3**, indications or parameters can be generated or processed by the scheduling component 332 to indicate the type of LBT protocol to be performed. In one example, a UE could be signaled via an indication whether the subframe scheduled by UL grant is within the same TxOP or outside the same TxOP, and likewise with the MCOT parameter or other parameter. This indication could also be utilized to determine the LBT to be performed by the UE 110, such as a category 4 LBT protocol or a shorter LBT protocol such as a single interval LBT or a clear channel assessment, for example. Before the transmission of the PUSCH transmission outside TxOP 902, the UE 110 can thus perform a cat 4 LBT, while for the case when PUSCH is within the TxOP 902 or MCOT a single interval LBT with a just a clear channel assessment puncturing the first symbol could be performed. As such, the UE 110 can know which LBT to perform and not incur the double LBT penalty to UL throughput based on an indication to schedule TxOP outside of or within the same TxOP 902 as the UL grant(s).

By providing indication information such as the LBT technique to use or related parameters for the UL grant only transmission, the UE 110 can know if the UL grant only transmission can be considered as the start of a transmission burst, and which LBT technique can be performed for the UL transmission following the UL grant only transmission. In one example, an indication to the UE can provide which LBT technique (e.g., single interval LBT, or Cat-4 LBT with which priority class) has already been performed for the UL grant only transmission by the eNB 102. In addition, an indication can be provided of the parameters for the LBT performed before the UL grant only transmission, e.g., the MCOT value.

In another aspect, the eNB 102 can provide an indication if the UL grant only transmission is a valid transmission burst to be followed with UL transmissions based on implicit or explicit indication. Then the UE 110 can select which LBT techniques to be used based on if the UL transmission is within a TxOP or the start of another TxOP or within a MCOT x used for the channel assessment or LBT by the eNB 102, for example. The indication information can be signaled via C-PDCCH. A new DCI format can be defined, with a newly defined RNTI, for example.

In an implicit indication, no common physical downlink control channel (e.g., C-PDCCH) transmitted together with (or multiplexed with) the UL grant only transmission can indicate or imply to the UE 110 that the UL grant only transmission is not the start of a transmission burst. When the UE detects the C-PDCCH to know which transmission burst the UL transmission (e.g., 904 or 906) should belong to, the UE 110 could not consider the UL grant only transmission as a valid start of a transmission burst 904 or 906 if the UL grant only transmission does not include C-PDCCH. For example, this can be applied to the case where a single interval LBT is performed for the UL grant only transmission as in the UL subframes 904 in FIG. 9 and subframes 904 and 906 in the example embodiment of FIG. 10.

As an explicit indication being provided in the DL transmission 902, the indication information can include the information of whether the UL grant only transmission 902 can be considered as the start of a transmission burst or not, and/or the length of the transmission burst starting with the UL grant only transmission. Based on the above information, the UE 110 can determine the LBT technique to perform for the UL transmission accordingly. As one embodiment of this option, the indication information can include 1 bit to indicate if this is a start of a TxOP. As another embodiment, if the UL grant only transmission can be considered as the start of a transmission burst, a burst ID or some toggling bits can be added to the indication information.

While the methods described within this disclosure are illustrated in and described herein as a series of acts or events, it will be appreciated that the illustrated ordering of such acts or events are not to be interpreted in a limiting sense. For example, some acts may occur in different orders and/or concurrently with other acts or events apart from those illustrated and/or described herein. In addition, not all illustrated acts may be required to implement one or more aspects or embodiments of the description herein. Further, one or more of the acts depicted herein may be carried out in one or more separate acts and/or phases.

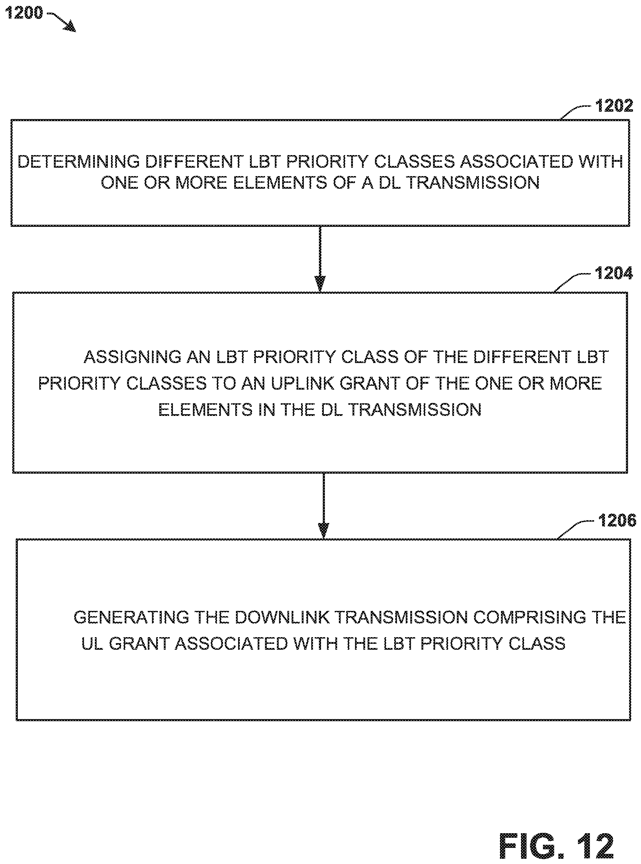

**FIG. 12** illustrates another example process flow or method 1200 for cross-TxOP scheduling operations as described herein for improving throughput and efficiency of a wireless network scheduling in transmissions. At 1202, the method 1200 includes determining different LBT priority classes associated with one or more elements of a dl transmission. In one example, a UL grant for a first UE can have a highest priority grant while a second UE has a different LBT priority class.

Additionally or alternatively, a UL grant in a first DL transmission of a first TxOP can have a first LBT priority class, while scheduling for subframes of a transmission within the first TxOP or in a different second TxOP. In another embodiment, the eNB can generate a UL grant in a first DL transmission of a first TxOP that has a first LBT priority class to a UE, and then generate a different UL grant in a second DL transmission with a second LBT priority class that is different than the first LBT priority class.

At 1204, the method 1200 comprises assigning an LBT priority class of the to an uplink grant among one or more elements (e.g., traffic or data) in the DL transmission. A DL transmission can comprise different types of traffic or data with different LBT priority classes. For example, a UL grant can one LBT priority class that dictates how an LBT is performed while a DL grant or PDSCH has a different LBT priority class.

At 1206, the method 1200 comprises generating the DL transmission comprising the UL grant associated with the LBT priority class.

Other embodiments, can include assigning the LBT priority class to the UL grant based on a DL grant LBT priority class of a DL grant. For example, the UL grant can be assigned an equal or lower LBT priority class, or an equal or higher LBT priority class, than the DL grant or DL grant transmission. In one example, a lowest LBT priority class from among the different LBT priority classes the eNB utilizes within or among the DL transmission can be assigned to LBT parameters in the DL transmission for an LBT operation or protocol.

In another embodiment, the eNB (e.g., 102) can generate the DL transmission first with a frequency first scheduling using a high priority traffic data with a same or higher LBT priority class than the UL grant, and a low priority traffic data with remaining resources of the DL transmission in a frequency domain without extending a time domain resource of the DL transmission. The low priority traffic data can comprises a lower LBT priority class than the high priority traffic data, for example.

In other examples, the eNB can generate multiplexing the UL grant with another element in a DL transmission corresponding to different LBT priority classes, respectively based on a set of preconditions. These preconditions can include comprising at least one of: assigning a lowest LBT priority class to an LBT parameter associated with the UL grant in the DL transmission, or generating the DL transmission with another element (e.g., PDSCH or DL grant) comprising an equivalent / lower / higher LBT priority class than the LBT priority class of the UL grant.

In another embodiment, the eNB can generate the DL transmission including the UL grant and an indication within a first transmission opportunity that indicates whether to schedule a UL transmission based on the UL grant and the LBT priority class within the first transmission opportunity or within a second transmission opportunity that is outside of and different than the first transmission opportunity. Further, another indication in the DL transmission can indicate to a UE (e.g., 110) whether to perform a category 4 LBT protocol or a clear channel assessment with a single LBT interval that is shorter than the category 4 LBT protocol, on the unlicensed band or the licensed band.

The method 1200 and embodiments herein can also be processed by a UE within a wireless network of the eNB 102, for example.

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

As employed in the subject specification, the term "processor" can refer to substantially any computing processing unit or device including, but not limited to including, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an application specific integrated circuit, a digital signal processor, a field programmable gate array, a programmable logic controller, a complex programmable logic device, a discrete gate or transistor logic, discrete hardware components, or any combination thereof designed to perform the functions and/or processes described herein. Processors can exploit nano-scale architectures such as, but not limited to, molecular and quantum-dot based transistors, switches and gates, in order to optimize space usage or enhance performance of mobile devices. A processor may also be implemented as a combination of computing processing units.

In the subject specification, terms such as "store," "data store," data storage," "database," and substantially any other information storage component relevant to operation and functionality of a component and/or process, refer to "memory components," or entities embodied in a "memory," or components including the memory. It is noted that the memory components described herein can be either volatile memory or nonvolatile memory, or can include both volatile and nonvolatile memory.

By way of illustration, and not limitation, nonvolatile memory, for example, can be included in a memory, non-volatile memory (see below), disk storage (see below), and memory storage (see below). Further, nonvolatile memory can be included in read only memory, programmable read only memory, electrically programmable read only memory, electrically erasable programmable read only memory, or flash memory. Volatile memory can include random access memory, which acts as external cache memory. By way of illustration and not limitation, random access memory is available in many forms such as synchronous random access memory, dynamic random access memory, synchronous dynamic random access memory, double data rate synchronous dynamic random access memory, enhanced synchronous dynamic random access memory, Synchlink dynamic random access memory, and direct Rambus random access memory. Additionally, the disclosed memory components of systems or methods herein are intended to include, without being limited to including, these and any other suitable types of memory.

Examples can include subject matter such as a method, means for performing acts or blocks of the method, at least one machine-readable medium including instructions that, when performed by a machine cause the machine to perform acts of the method or of an apparatus or system for concurrent communication using multiple communication technologies according to embodiments and examples described herein.
Example 1 is an apparatus configured to be employed in an evolved NodeB ("eNB") comprising: one or more processors configured to execute executable instructions stored in a memory for one or more executable components comprising: a communication component configured to generate a downlink ("DL") transmission corresponding to an unlicensed band or a licensed band; and a listen-before-talk ("LBT") component configured to determine different LBT priority classes associated with the DL transmission, and assign an LBT priority class to an uplink ("UL") grant of the DL transmission.
Example 2 includes the subject matter of Example 1, including or omitting optional elements, wherein the LBT component is further configured to assign the LBT priority class to the UL grant based on a DL grant LBT priority class of a DL grant.
Example 3 includes the subject matter of any one of Examples 1-2, including or omitting optional elements, wherein the LBT component is further configured to assign a lowest LBT priority class of the different LBT priority classes to LBT parameters in the DL transmission for an LBT protocol.
Example 4 includes the subject matter of any one of Examples 1-3, including or omitting optional elements, wherein the LBT component is further configured to generate the DL transmission first with a frequency first scheduling using a high priority traffic data with a same or higher LBT priority class than the UL grant, and a low priority traffic data with remaining resources of the DL transmission in a frequency domain without extending a time domain resource of the DL transmission, wherein the low priority traffic data comprises a lower LBT priority class than the high priority traffic data.
Example 5 includes the subject matter of any one of Examples 1-4, including or omitting optional elements, wherein the LBT component is further configured to multiplex traffic data corresponding to the different LBT priority classes into the DL transmission based on a set of preconditions, wherein the traffic data comprises the UL grant and another traffic data within the DL transmission.
Example 6 includes the subject matter of any one of Examples 1-5, including or omitting optional elements, wherein the set of preconditions comprises at least one of: assigning a lowest LBT priority class to an LBT parameter associated with the UL grant in the DL transmission, or generating the DL transmission with one or more traffic data comprising an equivalent LBT priority class or a higher LBT priority class than the LBT priority class of the UL grant, wherein the another traffic data comprises a physical downlink shared channel ("PDSCH") data.
Example 7 includes the subject matter of any one of Examples 1-6, including or omitting optional elements, wherein the set of preconditions includes, in response to the UL grant being transmitted with a single interval LBT, not multiplexing the UL grant with the another traffic data within the DL transmission.
Example 8 includes the subject matter of any one of Examples 1-7, including or omitting optional elements, wherein the communication component is further configured to generate the UL grant in a downlink control information ("DCI") Format 0 / 4 including 0a / 0b / 4a / 4b, and process a DL grant in a DCI Format 1 / 1A / 1B / 1C / 2 / 2A / 2B / 2C.
Example 9 includes the subject matter of any one of Examples 1-8, including or omitting optional elements, wherein the LBT priority class is associated with a contention window ("CW") minimum size, a CW maximum size, and a number of clear channel assessment ("CCA") slots within a defer period, and wherein the different LBT priority classes comprise higher LBT priority classes associated with at least one of: a smaller CW minimum size, a smaller CW maximum size, or a smaller number of CCA slots within the defer period than lower LBT priority classes
Example 10 includes the subject matter of any one of Examples 1-9, including or omitting optional elements, further comprising a scheduling component configured to generate within a first transmission opportunity the DL transmission comprising the UL grant and an indication of whether to schedule a UL transmission within the first transmission opportunity or a second transmission opportunity that is outside of and different than the first transmission opportunity.
Example 11 includes the subject matter of any one of Examples 1-10, including or omitting optional elements, wherein the scheduling component further configured to generate the DL transmission with another indication of whether to perform a category 4 LBT protocol or a clear channel assessment with a single LBT interval that is shorter than the category 4 LBT protocol, on the unlicensed band or the licensed band, before generating the UL transmission.
Example 12 includes the subject matter of any one of Examples 1-11, including or omitting optional elements,, wherein the LBT component is further configured to generate the DL transmission with the UL grant comprising a first LBT priority class associated with a first UE communicatively coupled to the communication component via a wireless network, and another DL transmission or the DL transmission with an additional UL grant comprising a second LBT priority class that is different from the first LBT priority class.
Example 13 is an apparatus configured to be employed in a user equipment ("UE") comprising: one or more processors configured to execute executable instructions stored in a memory for one or more executable components comprising: a communication component configured to process a downlink ("DL") transmission corresponding to an unlicensed band or a licensed band in a wireless network and generate one or more communication signals on the unlicensed band or the licensed band; and a listen-before-talk ("LBT") component configured to determine different LBT priority classes associated with data elements of the DL transmission, and generate an LBT operation based on an LBT priority class of an uplink ("UL") grant of the DL transmission to generate the one or more communication signals.
Example 14 includes the subject matter of Example 13, wherein the LBT component is further configured to process the DL transmission with the UL grant, wherein the priority class of the UL grant comprises is a different priority class level than another LBT priority class of a DL grant or a physical downlink shared channel ("PDSCH") of the DL transmission.
Example 15 includes the subject matter of any one of Examples 13-14, including or omitting optional elements, wherein the LBT priority class comprises an LBT priority level with a contention window (CW), a maximum CW size, a minimum CW size, and a number of clear channel assessment (CCA) slots, and wherein the different LBT priority classes comprise higher LBT priority classes associated with at least one of: a smaller CW minimum size, a smaller CW maximum size, or a smaller number of CCA slots within a defer period than lower LBT priority classes.
Example 16 includes the subject matter of any one of Examples 13-15, including or omitting optional elements, wherein, in response to the DL transmission comprising the different LBT priority classes, the LBT component is further configured to identify a lowest LBT priority class with one or more LBT parameters for performing an LBT operation or a channel access of the unlicensed band or the licensed band.
Example 17 includes the subject matter of any one of Examples 13-16, including or omitting optional elements, wherein, in response to the DL transmission comprising the UL grant and additionally a DL grant or PDSCH, the LBT component is further configured to perform an LBT operation based on a lowest LBT priority class respectively assigned among the UL grant, the DL grant or the PDSCH of the DL transmission, and wherein, in response to the DL transmission comprising only the UL grant, the LBT component is further configured to perform an LBT operation based on the LBT priority class assigned to the UL grant.
Example 18 includes the subject matter of any one of Examples 13-17, including or omitting optional elements, further comprising a scheduling component configured to generate a UL transmission within a different transmission opportunity than a transmission opportunity of the DL transmission based on the UL grant and an indication to schedule the UL transmission within the different transmission opportunity.
Example 19 includes the subject matter of any one of Examples 13-18, including or omitting optional elements, wherein the scheduling component is further configured to generate the UL transmission based on the indication, or on another indication of whether to perform a category 4 LBT protocol or a clear channel assessment with a single LBT interval that is shorter than the category 4 LBT protocol, on the unlicensed band or the licensed band.
Example 20 includes the subject matter of any one of Examples 13-19, including or omitting optional elements, wherein the scheduling component is further configured to determine at least one of: a start of a transmission or a length of the transmission, based on the DL transmission comprising only the UL grant and a start indication or a length indication.
Example 21 is a computer-readable medium storing executable instructions that, in response to execution, cause one or more processors of an evolved NodeB ("eNB") to perform operations, comprising: determining different LBT priority classes associated with one or more elements of a downlink ("DL") transmission; assigning an LBT priority class of the different LBT priority classes to an uplink ("UL") grant of the one or more elements in the DL transmission; and generating the DL transmission comprising the UL grant associated with the LBT priority class.
Example 22 includes the subject matter of Example 21, wherein the operations further comprise: assigning the LBT priority class to the UL grant based on a DL grant LBT priority class of a DL grant; and assigning a lowest LBT priority class of the different LBT priority classes among the DL transmission to LBT parameters in the DL transmission for an LBT protocol.
Example 23 includes the subject matter of any one of Examples 21-22, including or omitting optional elements, wherein the operations further comprise: generating the DL transmission with a frequency first scheduling using a high priority traffic data with a same or higher LBT priority class than the UL grant before generating a low priority traffic data with remaining resources of the DL transmission in a frequency domain without extending a time domain resource of the DL transmission, wherein the low priority traffic data comprises a lower LBT priority class than the high priority traffic data.
Example 24 includes the subject matter of any one of Examples 21-23, including or omitting optional elements, wherein the operations further comprise: multiplexing the UL grant and another element of the one or more elements corresponding to the different LBT priority classes, respectively into the DL transmission based on a set of preconditions comprising at least one of: assigning a lowest LBT priority class to an LBT parameter associated with the UL grant in the DL transmission, or generating the DL transmission with an element comprising an equivalent or higher LBT priority class than the LBT priority class of the UL grant, wherein the another element comprises a physical downlink shared channel ("PDSCH") data.
Example 25 includes the subject matter of any one of Examples 21-24, including or omitting optional elements, wherein the operations further comprise: generating the DL transmission including the UL grant and an indication within a first transmission opportunity, wherein the indication indicates whether to schedule a UL transmission based on the UL grant and the LBT priority class within the first transmission opportunity or within a second transmission opportunity that is outside of and different than the first transmission opportunity; and generating the DL transmission with another indication of whether to perform a category 4 LBT protocol or a clear channel assessment with a single LBT interval that is shorter than the category 4 LBT protocol, on the unlicensed band or the licensed band.
Example 26 is a computer-readable medium storing executable instructions that, in response to execution, cause one or more processors of a user equipment ("UE") to perform operations, comprising: processing a downlink ("DL") transmission corresponding to an unlicensed band or a licensed band in a wireless network; and determining different LBT priority classes associated with data elements of the DL transmission, and generate an LBT operation based on an LBT priority class of an uplink ("UL") grant of the DL transmission to generate a transmission.
Example 27 includes the subject matter of Example 26, wherein the operations further comprise: in response to the DL transmission comprising the different LBT priority classes, identifying a lowest LBT priority class with one or more LBT parameters for performing an LBT operation or a channel access of the unlicensed band or the licensed band; in response to the DL transmission comprising the UL grant and additionally a DL grant or PDSCH, performing the LBT operation based on a lowest LBT priority class respectively assigned among the UL grant, the DL grant or the PDSCH of the DL transmission, and wherein, in response to the DL transmission comprising only the UL grant, performing an LBT operation based on the LBT priority class assigned to the UL grant.
Example 28 includes the subject matter of any one of Examples 26-27, including or omitting optional elements, wherein the operations further comprise: generating a UL transmission within a different transmission opportunity than a transmission opportunity of the UL grant based on an indication within the DL transmission; and generating the UL transmission based on the indication or another indication of whether to perform a category 4 LBT protocol or a clear channel assessment with a single LBT interval that is shorter than the category 4 LBT protocol, on the unlicensed band or the licensed band.
Example 29 is a system of an evolved NodeB ("eNB") to perform operations, comprising: means for determining different LBT priority classes associated with one or more elements of a downlink ("DL") transmission; assigning an LBT priority class of the different LBT priority classes to an uplink ("UL") grant of the one or more elements in the DL transmission; and generating the DL transmission comprising the UL grant associated with the LBT priority class.
Example 30 includes the subject matter of Example 29, including or omitting optional elements, wherein the operations further comprise: means for assigning the LBT priority class to the UL grant based on a DL grant LBT priority class of a DL grant; and means for assigning a lowest LBT priority class of the different LBT priority classes among the DL transmission to LBT parameters in the DL transmission for an LBT protocol.
Example 31 includes the subject matter of any one of Examples 29-30, including or omitting optional elements, wherein the operations further comprise: means for generating the DL transmission with a frequency first scheduling using a high priority traffic data with a same or higher LBT priority class than the UL grant before generating a low priority traffic data with remaining resources of the DL transmission in a frequency domain without extending a time domain resource of the DL transmission, wherein the low priority traffic data comprises a lower LBT priority class than the high priority traffic data.
Example 32 includes the subject matter of any one of Examples 29-31, including or omitting optional elements, wherein the operations further comprise: means for multiplexing the UL grant and another element of the one or more elements corresponding to the different LBT priority classes, respectively into the DL transmission based on a set of preconditions comprising at least one of: assigning a lowest LBT priority class to an LBT parameter associated with the UL grant in the DL transmission, or generating the DL transmission with an element comprising an equivalent or higher LBT priority class than the LBT priority class of the UL grant, wherein the another element comprises a physical downlink shared channel ("PDSCH") data.
Example 33 includes the subject matter of any one of Examples 29-32, including or omitting optional elements, wherein the operations further comprise: means for generating the DL transmission including the UL grant and an indication within a first transmission opportunity, wherein the indication indicates whether to schedule a UL transmission based on the UL grant and the LBT priority class within the first transmission opportunity or within a second transmission opportunity that is outside of and different than the first transmission opportunity; and generating the DL transmission with another indication of whether to perform a category 4 LBT protocol or a clear channel assessment with a single LBT interval that is shorter than the category 4 LBT protocol, on the unlicensed band or the licensed band.
Example 34 is a system of a user equipment ("UE") to perform operations, comprising: means for processing a downlink ("DL") transmission corresponding to an unlicensed band or a licensed band in a wireless network; and means for determining different LBT priority classes associated with data elements of the DL transmission, and generate an LBT operation based on an LBT priority class of an uplink ("UL") grant of the DL transmission to generate a transmission.
Example 35 includes the subject matter of Example 34, wherein the operations further comprise: in response to the DL transmission comprising the different LBT priority classes, means for identifying a lowest LBT priority class with one or more LBT parameters for performing an LBT operation or a channel access of the unlicensed band or the licensed band; in response to the DL transmission comprising the UL grant and additionally a DL grant or PDSCH, performing the LBT operation based on a lowest LBT priority class respectively assigned among the UL grant, the DL grant or the PDSCH of the DL transmission, and wherein, in response to the DL transmission comprising only the UL grant, performing an LBT operation based on the LBT priority class assigned to the UL grant.
Example 36 includes the subject matter of any one of Examples 34-35, including or omitting optional elements, wherein the operations further comprise: means for generating a UL transmission within a different transmission opportunity than a transmission opportunity of the UL grant based on an indication within the DL transmission; and means for generating the UL transmission based on the indication or another indication of whether to perform a category 4 LBT protocol or a clear channel assessment with a single LBT interval that is shorter than the category 4 LBT protocol, on the unlicensed band or the licensed band.
Example 37 is a system configured to be employed in an evolved NodeB ("eNB") comprising: one or more processors configured to execute executable instructions stored in a memory for one or more executable components comprising: a communication component configured to generate a downlink ("DL") transmission corresponding to an unlicensed band or a licensed band; and a listen-before-talk ("LBT") component configured to determine different LBT priority classes associated with the DL transmission, and assign an LBT priority class to an uplink ("UL") grant of the DL transmission.
Example 38 includes the subject matter of Example 37, wherein the LBT component is further configured to assign the LBT priority class to the UL grant based on a DL grant LBT priority class of a DL grant.
Example 39 includes the subject matter of any one of Examples 37-38, including or omitting optional elements, wherein the LBT component is located at or included as part of a media access control (MAC) layer, a physical (PHY) layer or OSI layer.
Example 40 is a system configured to be employed in a user equipment ("UE") comprising: one or more processors configured to execute executable instructions stored in a memory for one or more executable components comprising: a communication component configured to process a downlink ("DL") transmission corresponding to an unlicensed band or a licensed band in a wireless network and generate one or more communication signals on the unlicensed band or the licensed band; and a listen-before-talk ("LBT") component configured to determine different LBT priority classes associated with data elements of the DL transmission, and generate an LBT operation based on an LBT priority class of an uplink ("UL") grant of the DL transmission to generate the one or more communication signals.
Example 41 includes the subject matter of Example 39, wherein the LBT component is further configured to process the DL transmission with the UL grant, wherein the priority class of the UL grant comprises is a different priority class level than another LBT priority class of a DL grant or a physical downlink shared channel ("PDSCH") of the DL transmission.
Example 42 includes the subject matter of any one of Examples 40-41, including or omitting optional elements, wherein the LBT component is located at or included as part of a media access control (MAC) layer, a physical (PHY) layer or OSI layer.

It is to be understood that aspects described herein can be implemented by hardware, software, firmware, or any combination thereof. When implemented in software, functions can be stored on or transmitted over as one or more instructions or code on a computer-readable medium. Computer-readable media includes both computer storage media and communication media including any medium that facilitates transfer of a computer program from one place to another. A storage media or a computer readable storage device can be any available media that can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or other tangible and/or non-transitory medium, that can be used to carry or store desired information or executable instructions. Also, any connection is properly termed a computer-readable medium. For example, if software is transmitted from a website, server, or other remote source using a coaxial cable, fiber optic cable, twisted pair, digital subscriber line (DSL), or wireless technologies such as infrared, radio, and microwave, then coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where *disks* usually reproduce data magnetically, while *discs* reproduce data optically with lasers. Combinations of the above should also be included within the scope of computer-readable media.

Various illustrative logics, logical blocks, modules, and circuits described in connection with aspects disclosed herein can be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform functions described herein. A general-purpose processor can be a microprocessor, but, in the alternative, processor can be any conventional processor, controller, microcontroller, or state machine. A processor can also be implemented as a combination of computing devices, for example, a combination of a DSP and a microprocessor, a plurality of microprocessors, one or more microprocessors in conjunction with a DSP core, or any other such configuration. Additionally, at least one processor can comprise one or more modules operable to perform one or more of the s and/or actions described herein.

For a software implementation, techniques described herein can be implemented with modules (e.g., procedures, functions, and so on) that perform functions described herein. Software codes can be stored in memory units and executed by processors. Memory unit can be implemented within processor or external to processor, in which case memory unit can be communicatively coupled to processor through various means as is known in the art. Further, at least one processor can include one or more modules operable to perform functions described herein.

Techniques described herein can be used for various wireless communication systems such as CDMA, TDMA, FDMA, OFDMA, SC-FDMA and other systems. The terms "system" and "network" are often used interchangeably. A CDMA system can implement a radio technology such as Universal Terrestrial Radio Access (UTRA), CDMA1800, *etc.* UTRA includes Wideband-CDMA (W-CDMA) and other variants of CDMA. Further, CDMA1800 covers IS-1800, IS-95 and IS-856 standards. A TDMA system can implement a radio technology such as Global System for Mobile Communications (GSM). An OFDMA system can implement a radio technology such as Evolved UTRA (E-UTRA), Ultra Mobile Broadband (UMB), IEEE 802.11 (Wi-Fi), IEEE 802.16 (WiMAX), IEEE 802.18, Flash-OFDML, *etc.* UTRA and E-UTRA are part of Universal Mobile Telecommunication System (UMTS). 3GPP Long Term Evolution (LTE) is a release of UMTS that uses E-UTRA, which employs OFDMA on downlink and SC-FDMA on uplink. UTRA, E-UTRA, UMTS, LTE and GSM are described in documents from an organization named "3rd Generation Partnership Project" (3GPP). Additionally, CDMA and UMB are described in documents from an organization named "3rd Generation Partnership Project 2" (3GPP2). Further, such wireless communication systems can additionally include peer-to-peer (*e.g.,* mobile-to-mobile) *ad hoc* network systems often using unpaired unlicensed spectrums, 802.xx wireless LAN, BLUETOOTH and any other short- or long- range, wireless communication techniques.

Single carrier frequency division multiple access (SC-FDMA), which utilizes single carrier modulation and frequency domain equalization is a technique that can be utilized with the disclosed aspects. SC-FDMA has similar performance and essentially a similar overall complexity as those of OFDMA system. SC-FDMA signal has lower peak-to-average power ratio (PAPR) because of its inherent single carrier structure. SC-FDMA can be utilized in uplink communications where lower PAPR can benefit a mobile terminal in terms of transmit power efficiency.

Moreover, various aspects or features described herein can be implemented as a method, apparatus, or article of manufacture using standard programming and/or engineering techniques. The term "article of manufacture" as used herein is intended to encompass a computer program accessible from any computer-readable device, carrier, or media. For example, computer-readable media can include but are not limited to magnetic storage devices (*e.g.,* hard disk, floppy disk, magnetic strips, *etc*.), optical disks (*e.g.,* compact disk (CD), digital versatile disk (DVD), *etc.*)*,* smart cards, and flash memory devices (*e.g.,* EPROM, card, stick, key drive, *etc.*)*.* Additionally, various storage media described herein can represent one or more devices and/or other machine-readable media for storing information. The term "machine-readable medium" can include, without being limited to, wireless channels and various other media capable of storing, containing, and/or carrying instruction(s) and/or data. Additionally, a computer program product can include a computer readable medium having one or more instructions or codes operable to cause a computer to perform functions described herein.

Communications media embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

Further, the actions of a method or algorithm described in connection with aspects disclosed herein can be embodied directly in hardware, in a software module executed by a processor, or a combination thereof. A software module can reside in RAM memory, flash memory, ROM memory, EPROM memory, EEPROM memory, registers, a hard disk, a removable disk, a CD-ROM, or any other form of storage medium known in the art. An exemplary storage medium can be coupled to processor, such that processor can read information from, and write information to, storage medium. In the alternative, storage medium can be integral to processor. Further, in some aspects, processor and storage medium can reside in an ASIC. Additionally, ASIC can reside in a user terminal. In the alternative, processor and storage medium can reside as discrete components in a user terminal. Additionally, in some aspects, the s and/or actions of a method or algorithm can reside as one or any combination or set of codes and/or instructions on a machine-readable medium and/or computer readable medium, which can be incorporated into a computer program product.

The above description of illustrated embodiments of the subject disclosure, including what is described in the Abstract, is not intended to be exhaustive or to limit the disclosed embodiments to the precise forms disclosed. While specific embodiments and examples are described herein for illustrative purposes, various modifications are possible that are considered within the scope of such embodiments and examples, as those skilled in the relevant art can recognize.

In this regard, while the disclosed subject matter has been described in connection with various embodiments and corresponding Figures, where applicable, it is to be understood that other similar embodiments can be used or modifications and additions can be made to the described embodiments for performing the same, similar, alternative, or substitute function of the disclosed subject matter without deviating therefrom. Therefore, the disclosed subject matter should not be limited to any single embodiment described herein, but rather should be construed in breadth and scope in accordance with the appended claims below.

In particular regard to the various functions performed by the above described components (assemblies, devices, circuits, systems, *etc*.), the terms (including a reference to a "means") used to describe such components are intended to correspond, unless otherwise indicated, to any component or structure which performs the specified function of the described component (*e.g*., that is functionally equivalent), even though not structurally equivalent to the disclosed structure which performs the function in the herein illustrated exemplary implementations of the disclosure. In addition, while a particular feature may have been disclosed with respect to only one of several implementations, such feature may be combined with one or more other features of the other implementations as may be desired and advantageous for any given or particular application.

## Claims

1. An apparatus configured to be employed in an evolved NodeB "eNB" (102) comprising:
one or more processors configured to execute executable instructions stored in a memory (324) for one or more executable components comprising:
a communication component (308) configured to generate a downlink "DL" transmission (602) corresponding to an unlicensed band or a licensed band; and
a listen-before-talk "LBT" component (332) configured to determine different LBT priority classes associated with the DL transmission (602), and assign an LBT priority class to an uplink "UL" grant (406) of the DL transmission (602) wherein the LBT component (332) is further configured to assign a lowest LBT priority class of the different LBT priority classes to LBT parameters in the DL transmission (602) for an LBT protocol; and **characterized by**:
a scheduling component (330) configured to generate within a first transmission opportunity (402) the DL transmission (602) comprising the UL grant (406) and an indication of whether to schedule a UL transmission (504, 604) within the first transmission opportunity (402) using a single LBT interval to perform a clear channel assessment or a second transmission opportunity (404) that is outside and different than the first transmission opportunity (402) using a category 4 LBT protocol.

2. The apparatus of claim 1, wherein the LBT component (332) is further configured to generate the DL transmission (602) using a high priority traffic data with a same or higher LBT priority class than the UL grant (406), and a low priority traffic data with remaining resources of the DL transmission (602) in a frequency domain without extending a time domain resource of the DL transmission (602), wherein the low priority traffic data comprises a lower LBT priority class than the high priority traffic data.

3. The apparatus of any one of claims 1-2, wherein the LBT component (332) is further configured to multiplex traffic data corresponding to the different LBT priority classes into the DL transmission (602) based on a set of preconditions, wherein the traffic data comprises the UL grant (406) and another traffic data within the DL transmission (602).

4. The apparatus of any one of claims 1-3, wherein the LBT priority class is associated with a contention window "CW" minimum size, a CW maximum size, and a number of clear channel assessment "CCA" slots within a defer period, and wherein the different LBT priority classes comprise higher LBT priority classes associated with at least one of: a smaller CW minimum size, a smaller CW maximum size, or a smaller number of CCA slots within the defer period than lower LBT priority classes

5. The apparatus of any one of claims 1-4, wherein the LBT component is further configured to generate the DL transmission (602) with the UL grant (406) comprising a first LBT priority class associated with a first UE (110) communicatively coupled to the communication component (308) via a wireless network, and another DL transmission or the DL transmission (602) with an additional UL grant comprising a second LBT priority class that is different from the first LBT priority class.

6. An apparatus configured to be employed in a user equipment "UE" (110) comprising:
one or more processors configured to execute executable instructions stored in a memory for one or more executable components comprising:
a communication component (308) configured to process a downlink "DL" transmission (602) corresponding to an unlicensed band or a licensed band in a wireless network and generate one or more communication signals on the unlicensed band or the licensed band; and
a listen-before-talk "LBT" component (332) configured to determine different LBT priority classes associated with data elements of the DL transmission (602), and generate an LBT operation based on an LBT priority class of an uplink "UL" grant (406) of the DL transmission (602) to generate the one or more communication signals; and **characterized by**:
a scheduling component (330) configured to generate a UL transmission (504, 604) within a same transmission opportunity (402), using a single LBT interval to perform a clear channel assessment, or different transmission opportunity (404), using a category 4 LBT protocol, than the transmission opportunity of the DL transmission (402) based on the UL grant (406) and an indication on when to schedule the UL transmission (504, 604).

7. The apparatus of claim 6, wherein the LBT component (332) is further configured to process the DL transmission (602) with the UL grant (406), wherein the priority class of the UL grant (406) comprises a different priority class level than another LBT priority class of a DL grant or a physical downlink shared channel "PDSCH" of the DL transmission (602).

8. The apparatus of any one of claims 6-7, wherein the LBT priority class comprises an LBT priority level with a contention window CW, a maximum CW size, a minimum CW size, and a number of clear channel assessment CCA slots, and wherein the different LBT priority classes comprise higher LBT priority classes associated with at least one of: a smaller CW minimum size, a smaller CW maximum size, or a smaller number of CCA slots within a defer period than lower LBT priority classes.

9. The apparatus of any one of claims 6-8, wherein, in response to the DL transmission (602) comprising the UL grant (406) and additionally a DL grant or PDSCH, the LBT component (332) is further configured to perform an LBT operation based on a lowest LBT priority class respectively assigned among the UL grant (406), the DL grant or the PDSCH of the DL transmission (602), and wherein, in response to the DL transmission (602) comprising only the UL grant (406), the LBT component (332) is further configured to perform an LBT operation based on the LBT priority class assigned to the UL grant.

10. A computer-readable medium storing executable instructions that, in response to execution, cause one or more processors of an evolved NodeB "eNB" (102) to perform operations, comprising:
determining different LBT priority classes associated with one or more elements of a downlink "DL" transmission (602);
assigning an LBT priority class of the different LBT priority classes to an uplink "UL" grant (406) of the one or more elements in the DL transmission (602); and **characterized by**:
generating the DL transmission (602) comprising the UL grant (406) associated with the LBT priority class and an indication within a first transmission opportunity (402), wherein the indication indicates whether to schedule a UL transmission (504, 604) based on the UL grant (406) and the LBT priority class within the first transmission opportunity (402) using a single LBT interval to perform a clear channel assessment or within a second transmission opportunity (404) that is outside of and different than the first transmission opportunity (402) using a category 4 LBT protocol.

11. The computer-readable medium of claim 10, wherein the operations further comprise:
assigning the LBT priority class to the UL grant (406) based on a DL grant LBT priority class of a DL grant; and
assigning a lowest LBT priority class of the different LBT priority classes among the DL transmission (602) to LBT parameters in the DL transmission (602) for an LBT protocol.

12. The computer-readable medium of any one of claims 10-11, wherein the operations further comprise:
generating the DL transmission (602) using a high priority traffic data with a same or higher LBT priority class than the UL grant (406) before generating a low priority traffic data with remaining resources of the DL transmission (602) in a frequency domain without extending a time domain resource of the DL transmission (602), wherein the low priority traffic data comprises a lower LBT priority class than the high priority traffic data.

13. The computer-readable medium of any one of claims 10-12, wherein the operations further comprise:
multiplexing the UL grant (406) and another element of the one or more elements corresponding to the different LBT priority classes, respectively into the DL transmission (602) based on a set of preconditions comprising at least one of: assigning a lowest LBT priority class to an LBT parameter associated with the UL grant (406) in the DL transmission (602), or generating the DL transmission (602) with an element comprising an equivalent or higher LBT priority class than the LBT priority class of the UL grant (406), wherein the another element comprises a physical downlink shared channel "PDSCH" data.

14. The computer-readable medium of any one of claims 10-13, wherein the operations further comprise:
generating the DL transmission (602) including the UL grant (406) and an indication within a first transmission opportunity (402), wherein the indication indicates whether to schedule a UL transmission (504, 604) based on the UL grant (406) and the LBT priority class within the first transmission opportunity (402) or within a second transmission opportunity (404) that is outside of and different than the first transmission opportunity (402); and
generating the DL transmission (602) with another indication of whether to perform a category 4 LBT protocol or a clear channel assessment with a single LBT interval that is shorter than the category 4 LBT protocol, on the unlicensed band or the licensed band.

## Patentansprüche

1. Vorrichtung, die dafür konfiguriert ist, in einem evolved NodeB, "eNB", (102) genutzt zu werden, wobei die Vorrichtung Folgendes umfasst:
einen oder mehrere Prozessoren, die dafür konfiguriert sind, ausführbare Anweisungen, die in einem Speicher (324) gespeichert sind, für eine oder mehrere ausführbare Komponenten auszuführen, wobei der eine oder die mehreren Prozessoren Folgendes umfassen:
eine Kommunikationskomponente (308), die dafür konfiguriert ist, eine Abwärtsstrecken-Übertragung, "DL-Übertragung", (602), die einem nicht lizenzierten Band oder einem lizenzierten Band entspricht, zu erzeugen; und
eine Hören-vor-Sprechen-Komponente, "LBT-Komponente", (332), die dafür konfiguriert ist, verschiedene LBT-Prioritätsklassen zu bestimmen, denen die DL-Übertragung (602) zugeordnet ist, und einer Aufwärtsstrecken-Gewährung, "UL-Gewährung", (406) der DL-Übertragung (602) eine LBT-Prioritätsklasse zuzuweisen, wobei die LBT-Komponente (332) ferner dafür konfiguriert ist, LBT-Parametern in der DL-Übertragung (602) für ein LBT-Protokoll eine niedrigste LBT-Prioritätsklasse der verschiedenen LBT-Prioritätsklassen zuzuweisen; und **gekennzeichnet durch**:
eine Planungskomponente (330), die dafür konfiguriert ist, innerhalb einer ersten Übertragungsgelegenheit (402) die DL-Übertragung (602) zu erzeugen, die die UL-Gewährung (406) und eine Angabe, ob eine UL-Übertragung (504, 604) innerhalb der ersten Übertragungsgelegenheit (402) unter Verwendung eines einzelnen LBT-Intervalls, um eine Freikanalanalyse auszuführen, oder einer zweiten Übertragungsgelegenheit (404), die außerhalb der ersten Übertragungsgelegenheit (402) liegt und von ihr verschieden ist, unter Verwendung eines Kategorie-4-LBT-Protokolls, zu planen ist, umfasst.

2. Vorrichtung nach Anspruch 1, wobei die LBT-Komponente (332) ferner dafür konfiguriert ist, die DL-Übertragung (602) unter Verwendung von Verkehrsdaten mit hoher Priorität mit einer selben oder höheren LBT-Prioritätsklasse als die UL-Gewährung (406) und von Verkehrsdaten mit niedriger Priorität mit verbleibenden Betriebsmitteln der DL-Übertragung (602) in einem Frequenzbereich zu erzeugen, ohne ein Zeitbereichsbetriebsmittel der DL-Übertragung (602) zu verlängern, wobei die Verkehrsdaten mit niedriger Priorität eine niedrigere LBT-Prioritätsklasse als die Verkehrsdaten mit hoher Priorität umfassen.

3. Vorrichtung nach einem der Ansprüche 1-2, wobei die LBT-Komponente (332) ferner dafür konfiguriert ist, Verkehrsdaten, die verschiedenen LBT-Prioritätsklassen entsprechen, auf der Grundlage einer Menge von Vorbedingungen in die DL-Übertragung (602) zu multiplexen, wobei die Verkehrsdaten die UL-Gewährung (406) und weitere Verkehrsdaten innerhalb der DL-Übertragung (602) umfassen.

4. Vorrichtung nach einem der Ansprüche 1-3, wobei der LBT-Prioritätsklasse eine Konkurrenzfenster-Minimalgröße, "CW-Minimalgröße", eine CW-Maximalgröße und eine Anzahl von Freikanalanalyse-Schlitzen, "CCA-Schlitzen", innerhalb einer Zurückstellungszeitdauer zugeordnet sind, und wobei die verschiedenen LBT-Prioritätsklassen höhere LBT-Prioritätsklassen umfassen, denen wenigstens eines der Folgenden zugeordnet ist: eine kleinere CW-Minimalgröße, eine kleinere CW-Maximalgröße oder eine kleinere Anzahl von CCA-Schlitzen innerhalb der Zurückstellungszeitdauer als niedrigeren LBT-Prioritätsklassen.

5. Vorrichtung nach einem der Ansprüche 1-4, wobei die LBT-Komponente ferner dafür konfiguriert ist, die DL-Übertragung (602) mit der UL-Gewährung (406), die eine erste LBT-Prioritätsklasse umfasst, der eine erste UE (110) zugeordnet ist, die über ein drahtloses Netz mit der Kommunikationskomponente (308) kommunikationstechnisch gekoppelt ist, und eine andere DL-Übertragung oder die DL-Übertragung (602) mit einer zusätzlichen UL-Gewährung, die eine zweite LBT-Prioritätsklasse, die von der ersten LBT-Prioritätsklasse verschieden ist, umfasst, zu erzeugen.

6. Vorrichtung, die dafür konfiguriert ist, in einem Anwendergerät "UE" (110) genutzt zu werden, wobei die Vorrichtung Folgendes umfasst:
einen oder mehrere Prozessoren, die dafür konfiguriert sind, ausführbare Anweisungen, die in einem Speicher gespeichert sind, für eine oder mehrere ausführbare Komponenten auszuführen, wobei der eine oder die mehreren Prozessoren Folgendes umfassen:
eine Kommunikationskomponente (308), die dafür konfiguriert ist, eine Abwärtsstrecken-Übertragung, "DL-Übertragung", (602), die einem nicht lizenziertem Band oder einem lizenziertem Band in einem drahtlosen Netz entspricht, zu verarbeiten und in dem nicht lizenziertem Band oder in dem lizenziertem Band ein oder mehrere Kommunikationssignale zu erzeugen; und
eine Hören-vor-Sprechen-Komponente "LBT-Komponente", (332), die dafür konfiguriert ist, verschiedene LBT-Prioritätsklassen zu bestimmen, denen Datenelemente der DL-Übertragung (602) zugeordnet sind, und auf der Grundlage einer LBT-Prioritätsklasse einer Aufwärtsstrecken-Gewährung, "UL-Gewährung", (406) der DL-Übertragung (602) eine LBT-Operation zu erzeugen, um das eine oder die mehreren Kommunikationssignale zu erzeugen; und **gekennzeichnet durch**:
eine Planungskomponente (330), die dafür konfiguriert ist, innerhalb einer selben Übertragungsgelegenheit (402) unter Verwendung eines einzelnen LBT-Intervalls zum Ausführen einer Freikanalanalyse oder einer anderen Übertragungsgelegenheit (404) unter Verwendung eines Kategorie-4-LBT-Protokolls als der Übertragungsgelegenheit der DL-Übertragung (402) auf der Grundlage der UL-Gewährung (406) eine UL-Übertragung (504, 604) und eine Angabe, wann die UL-Übertragung (504, 604) zu planen ist, zu erzeugen.

7. Vorrichtung nach Anspruch 6, wobei die LBT-Komponente (332) ferner dafür konfiguriert ist, die DL-Übertragung (602) mit der UL-Gewährung (406) zu verarbeiten, wobei die Prioritätsklasse der UL-Gewährung (406) ein anderes Prioritätsklassenniveau als eine andere LBT-Prioritätsklasse einer DL-Gewährung oder einen gemeinsam genutzten physikalischen Abwärtsstreckenkanal "PDSCH" der DL-Übertragung (602) umfasst.

8. Vorrichtung nach einem der Ansprüche 6-7, wobei die LBT-Prioritätsklasse einen LBT-Prioritätspegel mit einem Konkurrenzfenster CW, einer maximalen CW-Größe, einer minimalen CW-Größe und einer Anzahl Freikanalanalyse-CCA-Schlitzen umfasst, und wobei die verschiedenen LBT-Prioritätsklassen höhere LBT-Prioritätsklassen umfassen, denen wenigstens eines der Folgenden zugeordnet ist: eine kleinere CW-Minimalgröße, eine kleinere CW-Maximalgröße oder eine kleinere Anzahl von CCA-Schlitzen innerhalb einer Zurückstellungszeitdauer als niedrigere LBT-Prioritätsklassen.

9. Vorrichtung nach einem der Ansprüche 6-8, wobei die LBT-Komponente (332) als Reaktion auf die DL-Übertragung (602), die die UL-Gewährung (406) und zusätzlich eine DL-Gewährung oder einen PDSCH umfasst, ferner dafür konfiguriert ist, auf der Grundlage einer niedrigsten LBT-Prioritätsklasse, die jeweils unter der UL-Gewährung (406), der DL-Gewährung oder der PDSCH der DL-Übertragung (602) zugeordnet ist, eine LBT-Operation auszuführen, und wobei die LBT-Komponente (332) ferner dafür konfiguriert ist, als Reaktion darauf, dass die DL-Übertragung (602) nur die UL-Gewährung (406) umfasst, eine LBT-Operation auf der Grundlage der der UL-Gewährung zugewiesenen LBT-Prioritätsklasse auszuführen.

10. Computerlesbares Medium, das ausführbare Anweisungen speichert, die als Reaktion auf die Ausführung veranlassen, dass ein oder mehrere Prozessoren eines evolved NodeB "eNB" (102) Operationen ausführen, die Folgendes umfassen:
Bestimmen verschiedener LBT-Prioritätsklassen, die einem oder mehreren Elementen einer Abwärtsstrecken-Übertragung, "DL-Übertragung", (602) zugeordnet sind;
Zuweisen einer LBT-Prioritätsklasse der verschiedenen LBT-Prioritätsklassen zu einer Aufwärtsstrecken-Gewährung, "UL-Gewährung", (406) des einen oder der mehreren Elemente in der DL-Übertragung (602); und
**gekennzeichnet durch**
Erzeugen der DL-Übertragung (602), die die UL-Gewährung (406), der die LBT-Prioritätsklasse zugeordnet ist, und eine Angabe innerhalb einer ersten Übertragungsgelegenheit (402) umfasst, wobei die Angabe angibt, ob eine UL-Übertragung (504, 604) auf der Grundlage der UL-Gewährung (406) und der LBT-Prioritätsklasse innerhalb der ersten Übertragungsgelegenheit (402) unter Verwendung eines einzelnen LBT-Intervalls zum Ausführen einer Freikanalanalyse oder innerhalb einer zweiten Übertragungsgelegenheit (404), die außerhalb der ersten Übertragungsgelegenheit (402) liegt und von ihr verschieden ist, unter Verwendung eines Kategorie-4-LBT-Protokolls, zu planen ist.

11. Computerlesbares Medium nach Anspruch 10, wobei die Operationen ferner Folgendes umfassen:
Zuweisen der LBT-Prioritätsklasse zu der UL-Gewährung (406) auf der Grundlage einer DL-Gewährungs-LBT-Prioritätsklasse einer DL-Gewährung; und
Zuweisen einer niedrigsten LBT-Prioritätsklasse der verschiedenen LBT-Prioritätsklassen unter der DL-Übertragung (602) zu LBT-Parametern in der DL-Übertragung (602) für ein LBT-Protokoll.

12. Computerlesbares Medium nach einem der Ansprüche 10-11, wobei die Operationen ferner Folgendes umfassen:
Erzeugen der DL-Übertragung (602) unter Verwendung von Verkehrsdaten mit hoher Priorität mit einer selben oder höheren LBT-Prioritätsklasse als die UL-Gewährung (406) vor Erzeugen von Verkehrsdaten mit niedrigerer Priorität mit verbleibenden Betriebsmitteln der DL-Übertragung (602) in einem Frequenzbereich, ohne ein Zeitbereichsbetriebsmittel der DL-Übertragung (602) zu verlängern, wobei die Verkehrsdaten mit niedriger Priorität eine niedrigere LBT-Prioritätsklasse als die Verkehrsdaten mit hoher Priorität umfassen.

13. Computerlesbares Medium nach einem der Ansprüche 10-12, wobei die Operationen ferner Folgendes umfassen:
Multiplexen der UL-Gewährung (406) und eines anderen Elements des einen oder der mehreren Elemente, die den verschiedenen LBT-Prioritätsklassen entsprechen, jeweils in die DL-Übertragung (602) auf der Grundlage einer Menge von Vorbedingungen, die wenigstens eine der Folgenden umfassen: Zuweisen einer niedrigsten LBT-Prioritätsklasse zu einem LBT-Parameter, dem die UL-Gewährung (406) in der DL-Übertragung (602) zugeordnet ist, oder Erzeugen der DL-Übertragung (602) mit einem Element, das eine äquivalente oder höhere LBT-Prioritätsklasse als die LBT-Prioritätsklasse der UL-Gewährung (406) umfasst, wobei das andere Element Daten eines gemeinsam genutzten physikalischen Abwärtsstreckenkanals "PDSCH" umfasst.

14. Computerlesbares Medium nach einem der Ansprüche 10-13, wobei die Operationen ferner Folgendes umfassen:
Erzeugen der DL-Übertragung (602), die die UL-Gewährung (406) und eine Angabe innerhalb einer ersten Übertragungsgelegenheit (402) enthält, wobei die Angabe angibt, ob eine UL-Übertragung (504, 604) auf der Grundlage der UL-Gewährung (406) und der LBT-Prioritätsklasse innerhalb der ersten Übertragungsgelegenheit (402) oder innerhalb einer zweiten Übertragungsgelegenheit (404), die außerhalb der ersten Übertragungsgelegenheit (402) liegt und von ihr verschieden ist, zu planen ist; und
Erzeugen der DL-Übertragung (602) mit einer anderen Angabe, ob ein Kategorie-4-LBT-Protokoll oder eine Freikanalanalyse mit einem einzelnen LBT-Intervall, das kürzer als das Kategorie-4-LBT-Protokoll ist, in dem nicht lizenzierten Band oder in dem lizenziertem Band auszuführen ist.

## Revendications

1. Appareil configuré pour être utilisé dans un NodeB évolué "eNB" (102), comprenant :
un ou plusieurs processeurs configurés pour exécuter des instructions exécutables enregistrées dans une mémoire (324) pour un ou plusieurs composants exécutables comprenant :
un composant de communication (308) configuré pour générer une transmission en voie descendante "DL" (602) correspondant à une bande sans licence ou à une bande sous licence ; et
un composant de type écoute avant d'émettre "LBT" (332) configuré pour déterminer des classes de priorité de type LBT différentes associées à la transmission en DL (602) et assigner une classe de priorité de type LBT à une attribution en voie montante "UL" (406) de la transmission en DL (602), le composant de type LBT (332) étant configuré en outre pour assigner la plus faible classe de priorité de type LBT des classes de priorité de type LBT différentes à des paramètres de type LBT dans la transmission en DL (602) pour un protocole de type LBT ; et **caractérisé par** :
un composant d'ordonnancement (330) configuré pour générer, au sein d'une première opportunité de transmission (402), la transmission en DL (602) comprenant l'attribution en UL (406) et une indication s'il convient ou non d'ordonnancer une transmission en UL (504, 604) au sein de la première opportunité de transmission (402) à l'aide d'un intervalle de type LBT unique pour réaliser une évaluation de canal libre ou d'une deuxième opportunité de transmission (404) en dehors et différente de la première opportunité de transmission (402) à l'aide d'un protocole de type LBT de catégorie 4.

2. Appareil selon la revendication 1, dans lequel le composant de type LBT (332) est configuré en outre pour générer la transmission en DL (602) à l'aide de données de trafic de priorité élevée dont la classe de priorité de type LBT est la même ou est plus élevée que celle de l'attribution en UL (406) et de données de trafic de faible priorité avec des ressources restantes de la transmission en DL (602) dans un domaine fréquentiel sans étendre une ressource de domaine temporel de la transmission en DL (602), les données de trafic de faible priorité comprenant une classe de priorité de type LBT plus faible par rapport aux données de trafic de priorité élevée.

3. Appareil selon l'une quelconque des revendications 1-2, dans lequel le composant de type LBT (332) est configuré en outre pour multiplexer des données de trafic correspondant aux classes de priorité de type LBT différentes dans la transmission en DL (602) sur la base d'un ensemble de préconditions, les données de trafic comprenant l'attribution en UL (406) et d'autres données de trafic au sein de la transmission en DL (602).

4. Appareil selon l'une quelconque des revendications 1-3, dans lequel la classe de priorité de type LBT est associée à une taille minimale de fenêtre de contention "CW", à une taille maximale de CW et à un nombre de créneaux d'évaluation de canal libre "CCA" au sein d'une période de report, et dans lequel les classes de priorité de type LBT différentes comprennent des classes de priorité de type LBT plus élevées associées à une taille minimale de CW plus petite et/ou à une taille maximale de CW plus petite et/ou à un nombre plus petit de créneaux de CCA au sein de la période de report par rapport à des classes de priorité de type LBT plus faibles.

5. Appareil selon l'une quelconque des revendications 1-4, dans lequel le composant de type LBT est configuré en outre pour générer une transmission en DL (602) avec l'attribution en UL (406) comprenant une première classe de priorité de type LBT associée à un premier UE (110) couplé en communication au composant de communication (308) par le biais d'un réseau sans fil et une autre transmission en DL ou la transmission en DL (602) avec une attribution en UL additionnelle comprenant une deuxième classe de priorité de type LBT différente de la première classe de priorité de type LBT.

6. Appareil configuré pour être utilisé dans un équipement utilisateur "UE" (110), comprenant :
un ou plusieurs processeurs configurés pour exécuter des instructions exécutables enregistrées dans une mémoire pour un ou plusieurs composants exécutables comprenant :
un composant de communication (308) configuré pour générer une transmission en voie descendante "DL" (602) correspondant à une bande sans licence ou à une bande sous licence dans un réseau sans fil et générer un ou plusieurs signaux de communication sur la bande sans licence ou la bande sous licence ; et
un composant de type écoute avant d'émettre "LBT" (332) configuré pour déterminer des classes de priorité de type LBT différentes associées à des éléments de données de la transmission en DL (602) et générer une opération de type LBT sur la base d'une classe de priorité de type LBT d'une attribution en voie montante "UL" (406) de la transmission en DL (602) pour générer les un ou plusieurs signaux de communication ; et **caractérisé par** :
un composant d'ordonnancement (330) configuré pour générer une transmission en UL (504, 604) au sein d'une même opportunité de transmission (402) à l'aide d'un intervalle de type LBT unique pour réaliser une évaluation de canal libre ou d'une opportunité de transmission (404) à l'aide d'un protocole de type LBT de catégorie 4, différente de l'opportunité de transmission de la transmission en DL (402) sur la base de l'attribution en UL (406) et d'une indication du moment où il convient d'ordonnancer la transmission en UL (504, 604).

7. Appareil selon la revendication 6, dans lequel le composant de type LBT (332) est configuré en outre pour traiter la transmission en DL (602) avec l'attribution en UL (406), la classe de priorité de l'attribution en UL (406) comprenant un niveau de classe de priorité différent d'une autre classe de priorité de type LBT d'une attribution en DL ou un canal physique partagé en voie descendante "PDSCH" de la transmission en DL (602).

8. Appareil selon l'une quelconque des revendications 6-7, dans lequel la classe de priorité de type LBT comprend un niveau de priorité de type LBT avec une fenêtre de contention CW, une taille maximale de CW, une taille minimale de CW et un nombre de créneaux d'évaluation de canal libre CCA, et dans lequel les classes de priorité de type LBT différentes comprennent des classes de priorité de type LBT plus élevées associées à une taille minimale de CW plus petite et/ou à une taille maximale de CW plus petite et/ou à un nombre plus petit de créneaux de CCA au sein d'une période de report par rapport à des classes de priorité de type LBT plus faibles.

9. Appareil selon l'une quelconque des revendications 6-8, dans lequel, dans le cas où la transmission en DL (602) comprend l'attribution en UL (406) et également une attribution en DL ou un PDSCH, le composant de type LBT (332) est configuré en outre pour réaliser une opération de type LBT sur la base de la plus faible classe de priorité de type LBT respectivement assignée parmi l'attribution en UL (406), l'attribution en DL ou le PDSCH de la transmission en DL (602), et dans lequel, dans le cas où la transmission en DL (602) comprend uniquement l'attribution en UL (406), le composant de type LBT (332) est configuré en outre pour réaliser une opération de type LBT sur la base de la classe de priorité de type LBT assignée à l'attribution en UL.

10. Support lisible par ordinateur sur lequel sont enregistrées des instructions exécutables dont l'exécution amène un ou plusieurs processeurs d'un NodeB évolué "eNB" (102) à réaliser des opérations comprenant :
la détermination de classes de priorité de type LBT différentes associées à un ou plusieurs éléments d'une transmission en voie descendante "DL" (602) ;
l'assignation d'une classe de priorité de type LBT parmi les classes de priorité de type LBT différentes à une attribution en voie montante "UL" (406) des un ou plusieurs éléments dans la transmission en DL (602) ; et
**caractérisé par** :
la génération de la transmission en DL (602) comprenant l'attribution en UL (406) associée à la classe de priorité de type LBT et une indication au sein d'une première opportunité de transmission (402), l'indication indiquant s'il convient ou non d'ordonnancer une transmission en UL (504, 604) sur la base de l'attribution en UL (406) et de la classe de priorité de type LBT au sein de la première opportunité de transmission (402) à l'aide d'un intervalle de type LBT unique pour réaliser une évaluation de canal libre ou au sein d'une deuxième opportunité de transmission (404) en dehors et différente de la première opportunité de transmission (402) à l'aide d'un protocole de type LBT de catégorie 4.

11. Support lisible par ordinateur selon la revendication 10, dans lequel les opérations comprennent en outre :
l'assignation de la classe de priorité de type LBT à l'attribution en UL (406) sur la base d'une classe de priorité de type LBT d'attribution en DL d'une attribution en DL ; et
l'assignation de la plus faible classe de priorité de type LBT des classes de priorité de type LBT différentes parmi la transmission en DL (602) à des paramètres de type LBT dans la transmission en DL (602) pour un protocole de type LBT.

12. Support lisible par ordinateur selon l'une quelconque des revendications 10-11, dans lequel les opérations comprennent en outre :
la génération de la transmission en DL (602) à l'aide de données de trafic de priorité élevée dont la classe de priorité de type LBT est la même ou est plus élevée que celle de l'attribution en UL (406) préalablement à la génération de données de trafic de faible priorité avec des ressources restantes de la transmission en DL (602) dans un domaine fréquentiel sans étendre une ressource de domaine temporel de la transmission en DL (602), les données de trafic de faible priorité comprenant une classe de priorité de type LBT plus faible par rapport aux données de trafic de priorité élevée.

13. Support lisible par ordinateur selon l'une quelconque des revendications 10-12, dans lequel les opérations comprennent en outre :
le multiplexage de l'attribution en UL (406) et d'un autre élément des un ou plusieurs éléments correspondant aux classes de priorité de type LBT différentes, respectivement dans la transmission en DL (602) sur la base d'un ensemble de préconditions comprenant : l'assignation de la plus faible classe de priorité de type LBT à un paramètre de type LBT associé à l'attribution en UL (406) dans la transmission en DL (602) et/ou la génération de la transmission en DL (602) avec un élément comprenant une classe de priorité de type LBT équivalente ou plus élevée que la classe de priorité de type LBT de l'attribution en UL (406), l'autre élément comprenant des données de canal physique partagé en voie descendante "PDSCH".

14. Support lisible par ordinateur selon l'une quelconque des revendications 10-13, dans lequel les opérations comprennent en outre :
la génération de la transmission en DL (602) comportant l'attribution en UL (406) et une indication au sein d'une première opportunité de transmission (402), l'indication indiquant s'il convient ou non d'ordonnancer une transmission en UL (504, 604) sur la base de l'attribution en UL (406) et de la classe de priorité de type LBT au sein de la première opportunité de transmission (402) ou au sein d'une deuxième opportunité de transmission (404) en dehors et différente de la première opportunité de transmission (402) ; et
la génération de la transmission en DL (602) avec une autre indication s'il convient ou non de réaliser un protocole de type LBT de catégorie 4 ou une évaluation de canal libre avec un intervalle de type LBT unique par rapport au protocole de type LBT de catégorie 4, sur la bande sans licence ou la bande sous licence.
